(19) **Europäisches Patentamt / European Patent Office / Office européen des brevets**

(11) **EP 2 212 709 B1**

(12) **EUROPÄISCHE PATENTSCHRIFT**

(45) Veröffentlichungstag und Bekanntmachung des Hinweises auf die Patenterteilung:
**23.03.2011 Patentblatt 2011/12**

(21) Anmeldenummer: **08802314.8**

(22) Anmeldetag: **18.09.2008**

(51) Int Cl.:
***G01S 3/808*** *(2006.01)*

(86) Internationale Anmeldenummer:
**PCT/EP2008/007791**

(87) Internationale Veröffentlichungsnummer:
**WO 2009/056194 (07.05.2009 Gazette 2009/19)**

(54) **VORRICHTUNG UND VERFAHREN ZUR GENERIERUNG EINES STEREOAUDIOSIGNALS**

DEVICE AND METHOD FOR GENERATING A STEREO AUDIO SIGNAL

DISPOSITIF ET PROCÉDÉ DE PRODUCTION D'UN SIGNAL AUDIO STÉRÉO

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(30) Priorität: **29.10.2007 DE 102007051524**

(43) Veröffentlichungstag der Anmeldung:
**04.08.2010 Patentblatt 2010/31**

(73) Patentinhaber: **ATLAS Elektronik GmbH 28309 Bremen (DE)**

(72) Erfinder:
• **SCHMIDT, Heiko**
  **27299 Langwedel (DE)**
• **SCHWARZ, Jan-Philip**
  **28213 Bremen (DE)**

(74) Vertreter: **Wasiljeff, Johannes M.B.**
**Jabbusch Siekmann & Wasiljeff Patentanwälte**
**Otto-Lilienthal-Strasse 25**
**28199 Bremen (DE)**

(56) Entgegenhaltungen:
**DE-A1- 1 566 857    FR-A- 2 623 292**
**US-A- 6 166 689    US-A1- 2004 174 771**

• **COOKE, BRIAN: "Uses of Spatial Audio in Sonar" Februar 2002 (2002-02), DEFENCE AND CIVIIL INSTITUTE OF ENVIRONMENTAL MEDICINE , ONTARIO , XP002508880 Seiten II,1,2; Abbildung 4 Seiten 12,18-23 Seiten 26,27**
• **RICHARDSON S: "Three-dimensional auditory display of passive sonar data" JOURNAL OF THE ACOUSTICAL SOCIETY OF AMERICA, AIP / ACOUSTICAL SOCIETY OF AMERICA, MELVILLE, NY, US, Bd. 105, Nr. 2, 1. Februar 1999 (1999-02-01), Seite 1366, XP002221415 ISSN: 0001-4966**
• **BEHRINGER: "Technical Specifications" Mai 2000 (2000-05), BEHRINGER , WILLICH-MÜNCHHEIDE II, GERMANY , XP002508882 das ganze Dokument**

**Beschreibung**

Die Erfindung betrifft eine Vorrichtung sowie ein Verfahren zur Generierung eines Stereoaudiosignals aus mittels einer Sonaranlage empfangenen Wasserschallsignalen nach dem Oberbegriff von Anspruch 1 bzw. 9.

Eine solche Sonaranlage ist aus US 2004/174771 bekannt.

Herkömmliche Sonaranlagen dienen dem Empfang von Wasserschallsignalen, welche von Geräuschquellen emittiert werden. Ein üblicher Zweck herkömmlicher Anlagen ist es, eine Peilung in Form eines zu einer Geräuschquelle gehörigen Peilwinkel zu erhalten. Zum Empfang von Wasserschallsignalen weist eine derartige Sonaranlage eine Empfangsantenne mit einer Vielzahl von Wasserschallaufnehmern auf. Die Wasserschallaufnehmer sind bspw. elektroakustische Wandler, welche Wasserschallwellen empfangen und daraufhin elektrische Empfangssignale bereitstellen.

Die Empfangsantenne ist üblicherweise als Linearantenne, Seitenantenne, Zylinderbasis oder gebogene Basis ausgebildet. In Anhängigkeit von der Ausbildung der Empfangsantenne sind die Wasserschallaufnehmer unterschiedlich an der Empfangsantenne angeordnet. Im Fall einer Linearantenne sind die Wasserschallaufnehmer entlang einer Linie üblicherweise äquidistant angeordnet.

Eine derartige Sonaranlage weist ferner einen Richtungsbildner auf, mit dem Richtcharakteristiken mit jeweils unterschiedlichen Hauptempfangsrichtungen elektronisch bestimmbar sind. Die Hauptempfangsrichtung weist in Richtung des Empfangsmaximums der Hauptkeule der Richtcharakteristik. Im Allgemeinen ebenfalls vorhandene Nebenkeulen mit Nebenempfangsmaxima und diesen Nebenmaxima zugeordneten Nebenempfangsrichtungen werden vorliegend nicht weiter betrachtet.

Die Empfangssignale der einzelnen Wasserschallaufnehmer werden im Richtungsbildner für jede Hauptempfangsrichtung abhängig vom Wandlerort verzögert und zu Gruppensignalen bzw. Richtungssignalen zusammengefasst.

Jedem vom Richtungsbildner bereitgestellten Richtungssignal ist daher eine Hauptempfangsrichtung zugeordnet. Die Hauptempfangsrichtung bezeichnet bei einer horizontal ausgerichteten Empfangsantenne einen Peilwinkel in der Horizontalebene. Alle nachfolgenden Ausführungen beziehen sich auf eine horizontal ausgerichtete Empfangsantenne. Bei abweichender Ausrichtung der Empfangsantenne befinden sich die Hauptempfangsrichtungen bzw. Peilwinkel nicht in einer horizontalen Ebene, sondern in einer geneigten Ebene.

Die vom Richtungsbildner bereitgestellten Richtungssignale werden üblicherweise - nach einer weiteren Signalverarbeitung - einer Einrichtung zur visuellen Darstellung bereitgestellt, auf der die Richtungssignale entsprechend ihrem Schallpegel beeinflusst werden. Weist die Richtcharakteristik auf ein Ziel, ist der empfangene Schallpegel größer als die Schallpegel benachbarter Richtcharakteristiken.

Bekannt ist zudem die Umwandlung eines einzelnen Richtungssignals in ein akustisches Monoaudiosignal zur Wiedergabe über eine Monowiedergabeeinrichtung. Einzelne Richtungssignale sind damit getrennt voneinander als Monoaudiosignale einer Wiedergabeeinrichtung zuführbar. Nacheinander sind damit die den unterschiedlichen Hauptempfangsrichtungen zugeordneten Signale akustisch wiedergebbar und z.B. mit einem Kopfhörer zu hören. Durch Abhören von Schallpegeln benachbarter Richtcharakteristiken kann eine Geräuschquelle eingepeilt werden. Eine gleichzeitige Wiedergabe einer Vielzahl von Richtungssignale (mit unterschiedlichen Hauptempfangsrichtungen) wie bei einer bildlichen Darstellung gibt jedoch bei einer akustischen Wiedergabe mittels eines Monoaudiosignals keinen Überblick über die Peilsituation, weil die gleichzeitige Wiedergabe der Richtungssignale aus vielen Hauptempfangsrichtungen zu einem undifferenzierten Signal ohne die Möglichkeit der Zieltrennung führt. Laute Ziele dominieren; ein relativ schwaches Signal aus einer bestimmten Richtung würde weitgehend überdeckt werden.

Räumlich trennbare Schallquellen, d.h. Schallquellen, denen jeweils eine Richtungsinformation zugeordnet ist, sind nur bei einem richtungsselektiven Abhören voneinander unterscheidbar. Vergleichsweise leise Geräusche aus einer ersten Richtung sind dann noch gut von Geräuschen aus einer anderen Richtung zu differenzieren, selbst wenn letztere Geräusche signifikant lauter sind. DE 15 66 857 C3 macht sich die Tatsache zu Nutze, dass die aus verschiedenen Richtungssignalen generierten Audiosignale besser voneinander unterscheidbar sind, wenn den Audiosignalen Richtungsinformationen zugeordnet sind. DE 15 66 857 C3 generiert daher nicht ein einziges Monoaudiosignal aus einem Richtungssignal, sondern generiert aus den Richtungssignalen ein linkes und ein rechtes Audiosignal zur Wiedergabe über eine binaurale Wiedergabeeinrichtung, z.B. einen Stereokopfhörer. Hierzu gibt sie alle vom Richtungsbildner bereitgestellten Richtungssignale jeweils für den linken Audiokanal und für den rechten Audiokanal zuerst an je eine Gewichtungsanordnung für die Bereitstellung eines Lautstärkeunterschieds zwischen beiden Kanälen und dann an eine Verzögerungseinrichtung für die Bereitstellung eines Laufzeitunterschieds zwischen beiden Kanälen entsprechend dem Laufzeitunterschied eines Geräuschs an den Ohren einer Person.

Alle Empfangsrichtungen zusammen spannen einen festen akustischen "Beobachtungssektor" auf, d.h. einen Sektor der akustisch überwacht und daher nachfolgend Überwachungssektor genannt wird. In der Mitte dieses Überwachungssektors befindet sich eine senkrecht zur Längsachse der Empfangsantenne weisende Hauptbeobachtungsrichtung, welche vorliegend aufgrund der rein akustischen Überwachung des Überwachungssektors präziser als Haupthorchrichtung bezeichnet wird.

Das der Haupthorchrichtung zugeordnete Richtungssignal wird zur Bildung der beiden Audiosignale gleich gewichtet und gleich verzögert. Schallquellen in sich links oder rechts von der Haupthorchrichtung befindenden Richtungen werden dagegen zur Bildung des linken Audiosignals und zur Bildung des rechten Audiosignals zur Erzeugung des Stereoeffekts unterschiedlich gewichtet und/oder verzögert, so dass der Höreindruck die seitliche Abweichung von der Haupthorchrichtung wiedergibt.

Die aus DE 15 66 857 C3 bekannte Vorrichtung ermöglicht zwar die akustische Stereo-Abbildung eines Überwachungssektors. Sie hat jedoch den Nachteil, dass der Überwachungssektor durch die Summe aller vom Richtungsbildner bereitgestellten Richtungssignale fest vorgegeben ist. Ein Ausblenden von störenden Schallquellen ist nicht möglich. Folglich können Schallquellen, von denen Wasserschallsignale mit vergleichsweise großer Amplitude ausgehen, Wasserschallsignale von geringerer Amplitude als Störgeräusche überdecken.

Der Erfindung liegt daher das Problem zugrunde, Störgeräusche in den wiedergegebenen Audiosignalen zu verringern.

Die Erfindung löst diese Aufgabe durch eine Vorrichtung mit den Merkmalen des Anspruchs 1 sowie ein Verfahren mit den Merkmalen des Anspruchs 9.

Aus Wasserschallsignalen werden von einer Vielzahl von an einer Empfangsantenne angeordneten Wasserschallaufnehmern Empfangssignale gewonnen und einem Richtungsbildner bereitgestellt. Die dem Richtungsbildner bereitgestellten Empfangssignale sind analoge Empfangssignale oder digitale Empfangssignale. Wenn es digitale Empfangssignale sind, dann werden die analogen Empfangssignale, bevor sie dem Richtungsbildner zur Verfügung gestellt werden, in digitale Empfangssignale umgewandelt. Für die Umwandlung analoger in digitale Empfangssignale ist dem Richtungsbildner vorzugsweise eine Analogdigitalwandlereinrichtung vorgeschaltet, wobei am Eingang der Analogdigitalwandlereinrichtung die von den Wasserschallaufnehmern bereitgestellten Empfangssignale aufnehmbar sind und wobei über den Ausgang der Analogdigitalwandlereinrichtung dem Richtungsbildner digitale Empfangssignale bereitstellbar sind.

Der Richtungsbildner erzeugt Richtungssignale, indem er die eingehenden Empfangssignale zeitlich für jede Hauptempfangsrichtung unterschiedlich verzögert und konphas unter Berücksichtigung einer Amplitudenstaffelung aufsummiert. Jedem Richtungssignal ist dabei eine Hauptempfangsrichtung zugeordnet. Die zeitliche Verzögerung der Richtungssignale ist abhängig von der Geometrie der Empfangsantenne und insbesondere der Anordnung der Wasserschallaufnehmer auf der Empfangsantenne. Für eine bestimmte Hauptempfangsrichtung ist die zeitliche Verzögerung zwischen zwei benachbarten Wasserschallaufnehmern dabei gerade so, dass sie der Verzögerung entspricht, mit welcher eine aus einer Hauptempfangsrichtung kommende Wellenfront auf zwei benachbarte Wasserschallaufnehmer trifft.

Alle Hauptempfangsrichtungen liegen in einer zweidimensionalen, vorzugsweise horizontalen akustisch überwachten Überwachungsebene im dreidimensionalen realen Raum. Eine einer Schallquelle im realen Raum zugeordneten Richtung im dreidimensionalen Raum wird vereinfachend, vorzugsweise senkrecht, in die Überwachungsebene projiziert. Diese Überwachungsebene wird akustisch auf eine zweidimensionale Abbildungsebene abgebildet. Hierzu bildet der Stereomischer durch Aufsummierung von Richtungssignalen zwei Summensignale, welche als linkes Audiosignal und als rechtes Audiosignal einer Stereowiedergabeeinrichtung bereitstellbar sind. Insgesamt wird der dreidimensionale reale Raum somit akustisch auf die zweidimensionale Abbildungsebene abgebildet und hörbar gemacht. Dabei wird eine Hauptempfangsrichtung in der Überwachungsebene in eine zugeordnete Richtung in der Abbildungsebene abgebildet.

Sofern die Überwachungsebene jedoch aufgrund einer Neigung der Empfangsantenne aus der Horizontalebene heraus verschwenkt wird, ist auch die Abbildungsebene entsprechend verschwenkt. Der Einfachheit halber wird die vorliegende Erfindung jedoch anhand einer horizontal ausgerichteten Überwachungsebene, d.h. anhand einer horizontal ausgerichteten Empfangsantenne erläutert.

Der Erfindung liegt die Erkenntnis zugrunde, dass viele aus unterschiedlichen Richtungen abstrahlende Schallquellen bei Abbildung der Überwachungsebene auf die Abbildungsebene die Ortung bzw. Peilung einzelner Schallquellen aus dem Höreindruck erschweren. Zudem hat die Erfindung erkannt, dass die Abbildung unterschiedlicher Schallquellen auf die Abbildungsebene von unterschiedlicher Wichtigkeit sein kann. Die Erfindung stellt daher eine Auswählbarkeit wenigstens eines auf einen Abbildungssektor in der Abbildungsebene abzubildenden, in der Überwachungsebene liegenden Überwachungssektors bereit.

Gemäß der Erfindung werden im Stereomischer nur noch Richtungssignale zur Wiedergabe über eine Stereowiedergabeeinrichtung verarbeitet, welche einem oder mehreren ausgewählten Überwachungssektoren zugeordnet sind. Es werden daher nur noch die diesem bzw. diesen Überwachungssektoren zugeordneten Richtungssignale im Stereomischer zu einem Stereoaudiosignal verarbeitet. Das Stereoaudiosignal bezeichnet dabei das aus linkem Audiosignal und rechtem Audiosignal zusammengefasste Signal. Beide Audiosignale werden getrennt den beiden Kopfhörermuscheln eines Stereokopfhörers oder Lautsprechern einer Stereoanlage zugeführt und zum Detektieren, Peilen und/oder Klassifizieren von Zielen abgehört.

Das Stereoaudiosignal kann ein analoges Signal oder ein digitales Signal sein. Wenn das Stereoaudiosignal ein digitales Signal ist, ist dem Stereomischer eine Digitalanalogwandlereinrichtung nachgeschaltet. Ein vom Stereomischer bereitgestelltes digitales Stereoaudiosignal ist von der Digitalanalogwandlereinrichtung dann in ein analoges Stereoaudiosignal wandelbar und zur Wiedergabe mittels einer Stereowiedergabeeinrichtung bereitstellbar. Die Digitalanalogwandlereinrichtung ist vorzugsweise in den Stereomischer integriert.

Die Richtungssignale werden im Stereomischer bezüglich ihrer Amplituden oder Schallpegel gewichtet und/oder verzögert. Sowohl die Gewichtung als auch die Verzögerung erfolgen in Abhängigkeit von der Lage der einem Richtungssignal und damit einer Richtcharakteristik zugeordneten Hauptempfangsrichtung relativ zur Haupthorchrichtung. Die Haupthorchrichtung ist dabei diejenige zu einer Richtcharakteristik gehörende Hauptempfangsrichtung, der ein Richtungssignal zugeordnet ist, das für die Bildung des linken Audiosignals genauso gewichtet bzw. verzögert wird wie für die Bildung des rechten Audiosignals.

Durch geeignete Gewichtung und Verzögerung der Richtungssignale zur Bildung des linken und des rechten Audiosignals kann das Dämpfungsverhalten des menschlichen Gehörs und die Ausrichtung der menschlichen Ohren zu einer akustischen Quelle nachempfunden werden. Bei Wiedergabe des Stereoaudiosignals über eine binaurale Wiedergabeeinrichtung, wie beispielsweise einen Stereokopfhörer, ist die Dämpfung und Verzögerung der Signale im wesentlichen so, als würde ein den Stereokopfhörer tragender Anwender sich an der Stelle der Empfangsantenne befinden, in Richtung der Haupthorchrichtung blicken bzw. horchen und eingehende Wasserschallsignale als Luftschallsignale über seine beiden Ohren wahrnehmen. Aufgrund der Gewichtung und Verzögerung der eingehenden Richtungssignale bei der Summenbildung im Stereomischer ist folglich ein zweidimensionaler akustischer Eindruck herstellbar.

Die Haupthorchrichtung kann jedoch unter Umständen aus dem bzw. den Überwachungssektoren geschwenkt werden, bspw. um einen Eindruck des Hintergrundgeräusches zu erhalten. Dann fließt das der Haupthorchrichtung zugeordnetes Richtungssignal nicht in die beiden Audiosignale ein. Die Haupthorchrichtung ist jedoch in diesem Fall diejenige zu einer Richtcharakteristik gehörende Hauptempfangsrichtung, der ein Richtungssignal zugeordnet wäre, das für die Bildung des linken Audiosignals genauso gewichtet bzw. verzögert würde wie für die Bildung des rechten Audiosignals, wenn dieses Richtungssignal vom Stereomischer verarbeitet werden würde.

Ein ggf. im Stereomischer verarbeitetes Richtungssignal, welches in der Überwachungsebene einer im negativen Drehsinn gegenüber der Haupthorchrichtung verschwenkten Hauptempfangsrichtung zugeordnet ist, wird für die Bildung des linken Audiosignals stärker gewichtet und/oder weniger verzögert als für die Bildung des rechten Audiosignals. Entsprechend wird ein ggf. im Stereomischer verarbeitetes Richtungssignal, welches in der Überwachungsebene im positiven Drehsinn gegenüber der Haupthorchrichtung verschwenkten Hauptempfangsrichtung zugeordnet ist, für die Bildung des rechten Audiosignals stärker gewichtet und/oder weniger verzögert als für die Bildung des linken Audiosignals.

Bei obiger Definition der Haupthorchrichtung wird idealisiert davon ausgegangen, dass eine oder mehrere Empfangsantennen Schallsignale aus allen Richtungen des realen Raumes mit gleicher Dämpfung empfangen und Peilwinkel zu den Schallquellen dieser Schallsignale gleichmäßig gut auflösen können. Tatsächlich werden jedoch Schallwellen bei ihrer Ausbreitung im Wasser je nach Ausbreitungsrichtung unterschiedlich gedämpft; ferner können Peilwinkel zu Schallquellen unterschiedlicher Richtungen abhängig von der Antennenkonfiguration unterschiedlich gut aufgelöst werden. Andererseits werden in der Realität meistens mehrere Empfangsantennen verwendet. Eine näherungsweise vergleichbare Auflösung von Peilwinkeln zu Schallquellen in unterschiedlichen Richtungen ist damit in den meisten Fällen möglich.

In einer Ausführungsform der Erfindung stimmt die Haupthorchrichtung mit der in der Mitte aller Hauptempfangsrichtungen der Richtcharakteristiken liegenden mittleren Hauptempfangsrichtung der in der Mitte liegenden Richtcharakteristik überein. Diese Lage der Haupthorchrichtung ermöglicht es, gezielt in eine senkrecht zur Empfangsantenne weisende Richtung zu horchen. Bspw. kann die Empfangsantenne ein Flank Array, d.h. eine Linearantenne an einer Seite eines Wasserfahrzeugs sein. In diesem Fall wie auch in vielen anderen Fällen ist eine senkrecht zur Empfangsantenne, d.h. zur Querabrichtung, weisende Haupthorchrichtung von besonderer Bedeutung. Gerade aus dieser Richtung sind Wasserschallsignale besonders deutlich wahrnehmbar. Die höchste Gewichtung eines Richtungssignals für die Bildung des linken Audiosignals und des rechten Audiosignals findet für ein Richtungssignal statt, welches der Haupthorchrichtung zugeordnet ist. Folglich wird ein Wasserschallsignal mit größtmöglicher Amplitude zum Stereoaudiosignals verarbeitet, wenn es aus der Haupthorchrichtung auf die Empfangsantenne mit den Wasserschallaufnehmern trifft. Wenn die mittlere Hauptempfangsrichtung der Empfangsantenne von besonderem Interesse ist, ist es deshalb vorteilhaft, wenn die Haupthorchrichtung gleich der mittleren Hauptempfangsrichtung ist.

Schallquellen, welche geortet werden sollen, befinden sich jedoch unter Umständen nicht in der mittleren Hauptempfangsrichtung der Empfangsantenne. Gleichwohl muss jedoch eine akustisch abzubildende Schallquelle in einem ausgewählten Überwachungssektor liegen, um das die Schallquelle erfassende Richtungssignal als Audiosignal wiedergegeben werden zu können. Sofern dies zunächst nicht der Fall sein sollte, wird der bzw. ein Überwachungssektor zur Schallquelle geschwenkt. Idealerweise wird dabei der Überwachungssektor soweit geschwenkt, dass die Schallquelle in der Mitte des Überwachungssektors liegt. Es ist vorteilhaft, wenn nun auch die Haupthorchrichtung in der Mitte des Überwachungssektors liegt. Dann wird nämlich ein besonders signifikantes Richtungssignal aus dem Überwachungssektor, nämlich das der Haupthorchrichtung zugeordnete Richtungssignal, im Stereomischer zu Audiosignalen größtmöglicher Amplituden verarbeitet. Wasserschallsignale, welche aus einer Richtung innerhalb eines Überwachungssektors auf die Empfangsantenne treffen, sind deshalb besonders deutlich zu hören, wenn die Haupthorchrichtung in der Mitte dieses Überwachungssektors liegt.

Gemäß einer weiteren Ausführungsform ist die Haupthorchrichtung in der Überwachungsebene unabhängig von der Lage der Überwachungssektoren wählbar und dabei insbesondere gegenüber der antennenfesten Bezugsrichtung verschwenkbar. Die Überwachungssektoren in der Überwachungsebene werden wiederum auf Abbildungssektoren in der Abbildungsebene abgebildet. Nach einer Änderung der Haupthorchrichtung hat sich die Lage der Überwachungssektoren relativ zur neuen Haupthorchrichtung geändert. Jedoch hat sich die absolute Lage des Überwachungssektors nicht verändert und in der Abbildungsebene bleibt die Richtung, auf welche die Haupthorchrichtung abgebildet wird, unverändert. Es hat sich folglich in der Abbildungsebene die Lage des dem Überwachungssektor zugeordneten Abbildungssektors relativ zur Haupthorchrichtung geändert.

Für die Eingabe der Haupthorchrichtung ist eine Eingabeeinrichtung vorgesehen. Eine Eingabeeinrichtung kann ein Taster, ein Drehregler, eine Tastatur oder jede andere Einrichtung sein, mittels der ein Signal erzeugbar ist. Von der Eingabeeinrichtung ist ein Signal an den Stereomischer sendbar. Der Stereomischer passt die Gewichtung bzw. die Verzögerung der Richtungssignale zur Bildung des linken Audiosignals und zur Bildung des rechten Audiosignals derart an, dass die gewünschte Haupthorchrichtung mit der tatsächlichen Haupthorchrichtung übereinstimmt. Ist beispielsweise die Eingabeeinrichtung als Drehwinkelsensor an einem Drehstuhl ausgebildet, kann eine auf dem Drehstuhl sitzende Person die Haupthorchrichtung durch Verdrehen des Drehstuhls verschwenken. Trägt diese Person als Stereowiedergabeeinrichtung einen Kopfhörer, erhält auch sie den akustischen Eindruck, als würde sie sich selbst mit beiden Ohren im Wasser drehen.

In einer Ausführungsform der Erfindung ist der Öffnungswinkel eines Überwachungssektors gleich dem Öffnungswinkel eines dem Überwachungssektor in der Abbildungsebene zugeordneten Abbildungssektors. Hierdurch erhält man eine 1:1-Abbildung des Überwachungssektors auf den Abbildungssektor. Eine räumliche Lokalisation von Schallquellen ist folglich leicht und intuitiv möglich.

In einer alternativen Ausführungsform ist der Öffnungswinkel des Abbildungssektors um einen Spreizfaktor $\Psi$ größer oder kleiner als der Öffnungswinkel des Überwachungssektors. Der Spreizfaktor $\Psi$ ist dabei ein Faktor, der den Wert einer positiven reellen Zahl größer oder kleiner 1 hat. Somit ist eine akustische Lupe oder ein akustisches Verkleinerungsmittel bereitstellbar. Der Überwachungssektor ist dadurch auf einen größeren oder einen kleineren Abbildungssektor abbildbar.

Bei der Abbildung eines Überwachungssektors auf einen Abbildungssektor mit einem größeren Öffnungswinkel ist in der Abbildungsebene der Winkel zwischen den Horchrichtungen zu zwei akustisch abgebildeten Schallquellen größer als der Winkel zwischen den zugehörigen Empfangsrichtungen dieser Schallquellen in der Überwachungsebene. Dadurch ist eine genauere Richtungsauflösung innerhalb eines Überwachungssektors möglich. Bspw. kann dadurch festgestellt werden, ob es sich bei einer georteten Schallquelle tatsächlich um ein einziges Ziel handelt oder ob sich in einer Peilrichtung zwei oder mehr Ziele, beispielsweise ein Verband mehrerer Schiffe, befinden, die aufgrund mangelnder winkelmäßiger Auflösung der Richtcharakteristiken als eine einzige Schallquelle erfasst wird, aber durch den Horcheindruck getrennt werden können.

Umgekehrt ist auch eine Verkleinerung des Öffnungswinkels bei der Abbildung eines Überwachungssektors auf den zugeordneten Abbildungssektor möglich. Die Wahl eines kleineren Öffnungswinkels des Abbildungssektors verglichen mit dem Öffnungswinkel des zugeordneten Überwachungssektors ist insbesondere dann sinnvoll, wenn der Öffnungswinkel eines anderen Abbildungssektors größer gewählt ist als der Öffnungswinkel des diesem anderen Abbildungssektor zugeordneten Überwachungssektors. Wenn nämlich ein Überwachungssektor vergrößert in der Abbildungsebene abgebildet wird, können möglicherweise andere Überwachungssektoren in einer 1:1-Abbildung nicht mehr überlappungsfrei abgebildet werden, da dann die Summe der Öffnungswinkel aller Abbildungssektoren einen maximalen Winkelbereich in der Abbildungsebene, insbesondere 180° oder 360°, übersteigt.

Verkleinert man jedoch den Öffnungswinkel wenigstens eines weiteren Abbildungssektors relativ zu dem Öffnungswinkel des zugeordneten Überwachungssektors, dann kann eine akustische Abbildung aller Schallquellen aus allen Empfangsrichtungen auf die Abbildungsebene wieder möglich sein. Bereiche mit besonders relevanten Schallquellen können so vergrößert im Sinne von winkelmäßig gespreizt wiedergegeben werden, während andere Bereiche verkleinert im Sinne von winkelmäßig gestaucht wiedergegeben werden können und bei lediglich geringerer Richtungsauflösung noch beim Horchen wahrnehmbar sind. Wenn eine Schallquelle in einem derart verkleinerten Überwachungssektor erstmals detektiert wird, so ist sie hörbar, auch wenn die Empfangsrichtung dieser Schallquelle nicht genau lokalisiert werden kann. Für eine genauere Richtungsauflösung kann der Spreizfaktor $\Psi$, welcher für die Abbildung dieses Überwachungssektors gewählt ist, angepasst und in diesem Fall vergrößert werden.

Der Spreizfaktor $\Psi$ kann manuell eingegeben werden. Für die Eingabe des Spreizfaktors $\Psi$ ist vorzugsweise eine Eingabeeinrichtung vorgesehen. Diese Eingabeeinrichtung kann ein Taster, ein Drehregler, eine Tastatur oder ein ähnliches Eingabegerät sein. Die Eingabeeinrichtung stellt dem Stereomischer ein Signal bereit, welches der Stereomischer zur Bildung der Summensignale, d.h. für die Bildung des linken Audiosignals und für die Bildung des rechten Audiosignals, heranzieht. Der Spreizfaktor $\Psi$ geht in die Bemessungsregeln für die Gewichtung bzw. Verzögerung der Richtungssignale ein.

Bei einer weiteren Ausführungsform ist eine Eingabeeinrichtung zur Auswahl des oder der Überwachungssektoren und/oder eines oder mehrerer Richtungssignale vorgesehen. Mittels dieser Eingabeeinrichtung können Richtungssignale einzeln oder in Gruppen ausgewählt werden, welche im Stereomischer zur Bildung des linken Audiosignals und zur Bildung des rechten Audiosignals verarbeitet werden. Es kann aber auch der wenigstens eine Überwachungssektor ausgewählt werden. Da diesem Überwachungssektor Hauptempfangsrichtungen und den Hauptempfangsrichtungen Richtungssignale zugeordnet sind, findet mittelbar auch bei Auswahl des Überwachungssektors eine Auswahl von Richtungssignalen statt.

Von der Eingabeeinrichtung sind Signale zur Auswahl des wenigstens einen Überwachungssektors und/oder des wenigstens einen Richtungssignals an den Stereomischer oder an eine Einrichtung, über welche die vom Richtungsbildner bereitgestellten Richtungssignale an den Stereomischer übermittelt werden, sendbar. In dieser Einrichtung oder im Stereomischer wird dann das wenigstens eine Richtungssignal, welches in dem wenigstens einen ausgewählten Überwachungssektor liegt und/oder das wenigstens eine ausgewählte Richtungssignal selektiert, um aus dem wenigstens einen selektierten Richtungssignal Summensignale zu bilden.

Die Auswahl des wenigstens einen Überwachungssektors und/oder des wenigstens einen Richtungssignals ist in einer weiteren Ausführungsform automatisch vornehmbar. Hierfür ist eine Zielverfolgungseinrichtung vorgesehen. Ein Ziel bezeichnet dabei eine manuell oder automatisch ausgewählte Schallquelle. Diese Schallquelle kann sich bewegen. Infolge dessen kann sie sich auch aus einem Überwachungssektor herausbewegen. Ebenso ist es möglich, dass sich die Empfangsantenne bewegt. Insbesondere kann es sein, dass sich die Empfangsantenne an einem Schiff befindet und das Schiff seinen Kurs ändert. Auch dann kann sich eine Schallquelle aus einem Überwachungssektor herausbewegen. Die Zielverfolgungseinrichtung erkennt die einer Schallquelle zugeordnete Empfangsrichtung. Insbesondere erkennt die Zielverfolgungseinrichtung auch eine Richtungsänderung der von dieser Schallquelle empfangenen Wasserschallsignale.

Die Zielverfolgungseinrichtung sorgt dafür, dass dem Stereomischer die Richtungssignale bereitgestellt werden, welchen Hauptempfangsrichtungen zugeordnet sind, in welchen sich manuell oder automatisch detektierte Ziele befinden. Alternativ kann auch ein Überwachungssektor um ein Ziel definiert sein. Dann kann die Zielverfolgungseinrichtung auch mehrere Richtungssignale auswählen, welche in diesem Überwachungssektor liegen und diese Richtungssignale dem Stereomischer bereitstellen.

Im Stereomischer werden eingehende Richtungssignale zur Bildung des linken Audiosignals und zur Bildung des rechten Audiosignals in ihrer Lautstärke gewichtet. Die Gewichtung erfolgt mittels Gewichtungsfaktoren $\beta$. Ein Gewichtungsfaktor $\beta$ kann den Wert einer positiven reellen Zahl von 0 bis 1 annehmen. Die Amplitude eines mit dem Gewichtungsfaktor $\beta$ gewichteten Richtungssignals kann folglich unverändert bleiben oder bis auf 0 gedämpft werden.

Die Selektion von Richtungssignalen zur Bildung des linken Audiosignals und zur Bildung des rechten Audiosignals kann auch mittels der Gewichtungsfaktoren $\beta$ erfolgen. Die Gewichtungsfaktoren $\beta$ nehmen dann zur Bildung beider Audiosignale für nicht selektierte Richtungssignale jeweils den Wert einer positiven reellen Zahl deutlich kleiner als 1, vorzugsweise den Wert 0, ein.

Die Amplitude eines der Haupthorchrichtung zugeordneten Richtungssignals weist sowohl für die Bildung des linken Audiosignals wie auch für die Bildung des rechten Audiosignals den Wert 1 auf. Mit 1 werden ebenso alle Richtungssignale gewichtet, welche zur Bildung des linken Audiosignals herangezogen werden und gleichzeitig Hauptempfangsrichtungen links von der Haupthorchrichtung zugeordnet sind, sowie alle Signale, welche zur Bildung des rechten Audiosignals herangezogen werden und gleichzeitig Hauptempfangsrichtungen rechts von der Haupthorchrichtung zugeordnet sind. Alle jeweils übrigen Richtungssignale werden zur Bildung des linken Audiosignals bzw. zur Bildung des rechten Audiosignals winkelabhängig gedämpft, indem sie mit dem Wert einer positiven reellen Zahl kleiner als 1 gewichtet werden.

Ein Gewichtungsfaktor $\beta_{L,m}$ für die Gewichtung eines m-ten Richtungssignals zur Bildung des linken Audiosignals und ein Gewichtungsfaktor $\beta_{R,m}$ für die Gewichtung des m-ten Richtungssignals zur Bildung des rechten Audiosignals wird gemäß

$$\beta_{L,m} = \begin{cases} 1 & f\ddot{u}r \; ((\phi_m - \Phi) \cdot \Psi) \geq -90° \; und \; ((\phi_m - \Phi) \cdot \Psi) \leq 0° \\ \cos((\phi_m - \Phi) \cdot \Psi \cdot \frac{\pi}{180°}) & f\ddot{u}r \; ((\phi_m - \Phi) \cdot \Psi) > 0° \; und \; ((\phi_m - \Phi) \cdot \Psi) \geq 90° \\ 0 & sonst \end{cases}$$

und

$$\beta_{R,m} = \begin{cases} 1 & \text{für } ((\phi_m - \Phi) \cdot \Psi) \le 90° \text{ und } ((\phi_m - \Phi) \cdot \Psi) \ge 0° \\ \cos((\phi_m - \Phi) \cdot \Psi \cdot \dfrac{\pi}{180°}) & \text{für } ((\phi_m - \Phi) \cdot \Psi) < 0° \text{ und } ((\phi_m - \Phi) \cdot \Psi) \ge -90° \\ 0 & \text{sonst} \end{cases}$$

berechnet. Dabei bezeichnet $\phi_m$ die dem m-ten Richtungssignal zugeordnete Hauptempfangsrichtung, $\Phi$ die Haupthorchrichtung und $\Psi$ den Spreizfaktor.

Die angegebenen Formeln beziehen sich auf die Berechnung der Gewichtungsfaktoren β für einen einzigen gewählten Spreizfaktor $\Psi$. D.h. das Verhältnis der Öffnungswinkel von Abbildungssektor zu zugeordnetem Überwachungssektor ist auch für mehrere abzubildende Überwachungssektoren gleich.

Aufgrund dieser vorteilhaften Bemessung der Gewichtsfaktoren $\beta_{L,m}$ und $\beta_{R,m}$ für die Gewichtung der Richtungssignale zur Bildung des linken Audiosignals bzw. für die Gewichtung der Richtungssignale zur Bildung des rechten Audiosignals kann das Dämpfungsverhalten des menschlichen Ohres optimiert nachempfunden werden.

Die Richtungsauflösung im Abbildungsbereich wird weiter dadurch verbessert, dass die Richtungssignale bei der Summenbildung im Stereomischer nicht nur winkelabhängig gewichtet, sondern auch winkelabhängig verzögert werden. Hierzu werden bevorzugt Verzögerungskoeffizienten δ verwendet. Für die Bildung des linken Audiosignals wird ein m-tes Richtungssignal verzögert mit

$$\delta_{L,m} = \frac{D}{2 \cdot v_{air}} \cdot \sin\left(\psi \cdot (\phi_m - \Phi) \cdot \frac{\pi}{180°}\right); \text{ mit } m = \{1,2,\dots,N_{BS}\}.$$

Für die Bildung des rechten Audiosignals wird das m-te Richtungssignal verzögert mit

$$\delta_{R,m} = -\frac{D}{2 \cdot v_{air}} \cdot \sin\left(\psi \cdot (\phi_m - \Phi) \cdot \frac{\pi}{180°}\right); \text{ mit } m = \{1,2,\dots, N_{BS}\}.$$

Dabei ist D ein angenommener Abstand zwischen zwei Ohren eines Menschen, $v_{air}$ die Schallgeschwindigkeit in Luft, $\phi_m$ die dem m-ten Richtungssignal zugeordnete Hauptempfangsrichtung und $\Phi$ die Haupthorchrichtung. Die Erfindung berücksichtigt dabei, dass eine Wellenfront eines Schallsignals, welches aus einer seitlichen Richtung auf die Ohren trifft, erst auf ein erstes und in einer zeitlichen Verzögerung auf ein zweites Ohr trifft, wobei die zeitliche Verzögerung vom Einfallswinkel des Schallsignals abhängig ist. Ein natürlicher Höreindruck eines über eine Stereowiedergabeeinrichtung, insbesondere über eine binaurale Wiedergabeeinrichtung wiedergegebenen vom Stereomischer bereitgestellten Stereoaudiosignals kann somit noch verstärkt werden.

Alle Richtungssignale werden bei der Summenbildung ggf. noch zusätzlich um eine feste Zeit verzögert. Ein positiver Verzögerungskoeffizient δ erhöht diese Verzögerungszeit, während ein negativer Verzögerungskoeffizient δ diese Verzögerungszeit verringert. Damit ist eine technisch an sich nicht ausführbare negative Verzögerung bei der Signalverarbeitung im Stereomischer vermeidbar.

Alternativ und weniger präzise ist die Richtungsauflösung im Abbildungsbereich auch alleine über die winkelabhängige Gewichtung der Richtungssignale oder ggf. auch alleine über die winkelabhängige Verzögerung der Richtungssignale herstellbar.

Weitere vorteilhafte Ausführungsformen ergeben sich aus den Unteransprüchen sowie aus den anhand der beigefügten Zeichnung näher erläuterten Ausführungsbeispielen. In der Zeichnung zeigen:

Fig. 1    ein Diagramm zur Veranschaulichung einer Signalverarbeitung zur Bildung eines Stereoaudiosignals aus empfangenen Wasserschall- signalen;

Fig. 2    eine Darstellung zur Veranschaulichung der Funktionsweise eines Richtungsbildners;

Fig. 3 eine Darstellung zur Veranschaulichung der Funktionsweise eines Stereomischers;

Fig. 4 eine Darstellung eines Überwachungssektors mit einer in einer mittle- ren Hauptempfangsrichtung liegenden Hauptorchrichtung, welche in der Mitte des Überwachungssektors liegt, sowie eine korrespondie- rende Darstellung einer 1:1-Abbildung des Überwachungssektors auf einen Abbildungssektor gemäß einem ersten Ausführungsbeispiel der Erfindung;

Fig. 5 eine Darstellung eines Überwachungssektors mit einer in der Mitte des Überwachungssektors liegenden, gegenüber der mittleren Hauptempfangsrichtung der Empfangsantenne verschwenkten Hauptorchrichtung sowie eine korrespondierende Darstellung einer um den Faktor 8 gespreizten Abbildung des Überwachungssektors auf einen Abbildungssektor gemäß einem zweiten Ausführungsbei- spiel der Erfindung und

Fig. 6 eine Darstellung mehrerer Überwachungssektoren, wobei die Haupt- horchrichtung gegenüber der mittleren Hauptempfangsrichtung der Empfangsantenne verschwenkt ist und außerhalb eines Überwa- chungssektors liegt, sowie eine korrespondierende Darstellung der den Überwachungssektoren zugeordneten Abbildungssektoren.

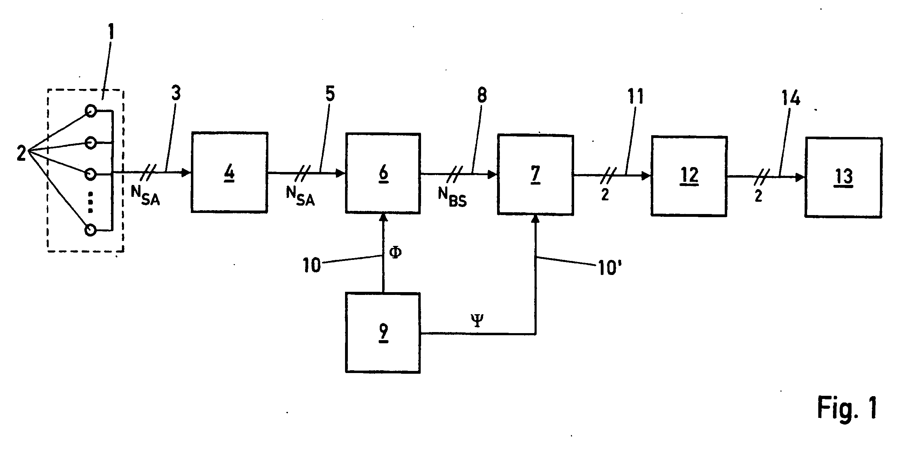

Fig. 1 zeigt schematisch eine Signalverarbeitung von von einer Sonaranlage empfangenen Wasserschallsignalen zum Bilden eines Stereoaudiosignals.

Eine Empfangsantenne 1 weist eine Vielzahl von Wasserschallaufnehmern 2 auf. Jeder Wasserschallaufnehmer 2 wandelt Wasserschallsignale in analoge Empfangssignale 3 um. Über eine oder mehrere elektrische Leitungen werden die Empfangssignale 3 einem Analogdigitalwandler 4 zugeführt. Der Analogdigitalwandler 4 wandelt die analogen Empfangssignale 3 in digitale Empfangssignale 5 um. Diese digitalen Empfangssignale 5 stellt er über eine oder mehrere elektrische Leitungen einem Richtungsbilder 6 bereit. Der Richtungsbildner 6 bildet aus den digitalen Empfangssignalen 5 eine Vielzahl von Richtungssignalen 8. Ein oder mehrere Richtungssignale 8 liegen dabei in einem Überwachungssektor. Über eine elektrische Leitung oder Leitungen sind die Richtungssignale 8 vom Richtungsbildner 6 einem Stereomischer 7 bereitstellbar. Mittels einer Eingabevorrichtung 9 sind über eine oder mehrere elektrische Leitungen Eingabesignale 10 zur Selektion von Richtungen an eine dem Richtungsbildner 6 nachgeschaltete Einrichtung sendbar. Diese Einrichtung kann sich zwischen dem Ausgang des Richtungsbildners 6 und dem Eingang des Stereomischers 7 befinden oder auch in den Stereomischer 7 integriert sein.

Über die Eingabevorrichtung 9 sind zudem eine Haupthorchrichtung Φ und/oder ein Spreizfaktor Ψ wählbar. Anstelle einer einzigen Eingabevorrichtung 9 können für unterschiedliche wählbare Einstellungen auch unterschiedliche Eingabegeräte verwendet werden. Unter der Eingabevorrichtung 9 ist dabei jedes beliebige Gerät zu verstehen, mittels dessen ein elektrisches Signal erzeugbar ist. Insbesondere kann es sich dabei um einen Taster, einen Drehregler und/ oder um eine Tastatur handeln.

Über eine oder mehrere elektrische Leitungen sind ein Eingabesignal 10 zur Festlegung einer Hauptorch- richtung Φ vom Eingabegerät 9 an den Richtungsbildner 6 und/oder an den Stereomischer 7 und/oder ein Eingabesignal 10' zur Festlegung wenigstens eines Spreizfaktors Ψ vom Eingabegerät 9 an den Stereomischer 7 sendbar. Im Stereomischer erfolgt eine Summenbildung mittels bestimmter Formeln, in welche u.a. die gewählte Hauptorchrichtung Φ und der Spreizfaktor Ψ einfließen.

Über elektrische Leitungen ist ein digitales Stereoaudiosignal 11, welches sich aus einem linken Audiosignal und einem rechten Audiosignal zusammensetzt, für einen Digitalanalogwandler 12 bereitstellbar. Der Digitalanalogwandler 12 wandelt das digitale Stereoaudiosignal zur Wiedergabe über eine Stereowiedergabeeinrichtung 13, welche mittels elektrischer Leitungen mit dem Digitalanalogwandler 12 verbindbar ist, in ein analoges Stereoaudiosignal 14 um. Zur Wiedergabe durch eine Stereowiedergabeeinrichtung wird das analoge Stereoaudiosignal 14 folglich entweder direkt vom Stereomischer 7 oder nach Digitalanalogwandlung vom Digitalanalogwandler 12 bereitgestellt.

Unter der Stereowiedergabeeinrichtung 13 ist eine beliebige Einrichtung zu verstehen, mittels der aus wenigstens zwei elektrischen Signalen wenigstens zwei Schallsignale generierbar sind, wobei mittels dieser wenigstens zwei Schallsignale akustisch eine Abbildungsebene aufspannbar ist. Insbesondere ist das Stereoaudiosignal 14 zur Wiedergabe über eine binaurale Wiedergabeeinrichtung, bspw. einem Stereokopfhörer, bereitstellbar, welche das linke Audiosignal einem ersten Teil der Wiedergabeeinrichtung bereitstellt, wobei der erste Teil der Wiedergabeeinrichtung Schallsignale ausschließlich oder vorwiegend zur Wahrnehmung durch das linke Ohr einer Bedienperson oder allgemein eines Hörers generiert, und das rechte Audiosignal einem zweiten Teil der Wiedergabeeinrichtung bereitstellt, wobei der zweite Teil der Wiedergabeeinrichtung Schallsignale ausschließlich oder vorwiegend zur Wahrnehmung durch das rechte Ohr der Bedienperson bzw. des Hörers generiert.

Das von der Sonaranlage bereitgestellte Stereoaudiosignal 14 ist jedoch auch in einem Zimmer bzw. Raum, bspw. Schulungsraum oder bei Wachwechseln genutzten Besprechungsraum, aufgestellten Lautsprechern außerhalb eines Kopfhörers bereitstellbar, welche Schallsignale generieren, die von beiden Ohren eines Hörers wahrnehmbar sind. In einem derartigen Raum können Schallsignale einem größeren Personenkreis wiedergegeben werden. Beispielsweise können zu Schulungszwecken mehreren Schulungsteilnehmern zuvor aufgenommene Schallsignale vorgespielt werden. Ferner kann beispielsweise bei Schichtübergabe an Bord eines Wasserfahrzeugs einer nachfolgenden Wachmannschaft während der vorausgegangenen Schicht aufgenommene Schallsignale wiedergegeben werden, um über besondere akustische Ereignisse zu informieren.

Auch in diesem Fall der Wiedergabe mittels Lautsprechern außerhalb eines Kopfhörers ist eine akustische Abbildungsebene oder - im Fall mehrerer räumlich angeordneter Lautsprecher - ein akustischer Abbildungsraum aufspannbar. Allerdings ist der Stereo-Höreindruck dann weniger präzise als der Stereo-Höreindruck, welcher von einem Stereokopfhörer aus dem binauralen Stereoaudiosignal 14 herstellbar ist. Auf das linke Ohr eines Hörers treffen dann nämlich die Schallwellen, welche aus dem linken Audiosignal generiert werden, sowie die Schallwellen, welche aus dem rechten Audiosignal generiert werden. Aus einem links von der Haupthorchrichtung eintreffenden Wasserschallsignal wird folglich ein linkes Audiosignal und zeitverzögert ein rechtes Audiosignal generiert. Das aus dem rechten Audiosignal mittels der Stereowiedergabeeinrichtung 13 generierte Schallsignal ist folglich gegenüber dem mittels der Stereowiedergabeeinrichtung 13 aus dem linken Audiosignal generierten Schallsignal verzögert und trifft zudem weiter zeitlich verzögert auf das linke Ohr, da der Weg des aus dem rechten Audiosignal generierten Schallsignals zum linken Ohr weiter ist als der Weg des aus dem linken Audiosignal generierten Schallsignals zum linken Ohr. Insgesamt ergibt sich somit der Effekt eines Echos, weil ein zur Wahrnehmung über ein linkes Ohr bestimmtes Schallsignal gedämpft und zeitlich verzögert nochmals auf das linke Ohr fällt. Ein Echoeffekt für ein rechtes Ohr ergibt sich entsprechend.

Die Erfindung ist nicht auf eine bestimmte Nutzung des von der Sonaranlage bereitgestellten Stereoaudiosignals 11 bzw. 14 beschränkt. Beispielsweise ist es auch möglich, das von der Sonaranlage bereitgestellte Stereoaudiosignal 11 bzw. 14 einer Einrichtung zum Speichern von Audiosignalen oder einer Einrichtung zum Verstärken von Audiosignalen, insbesondere einem Stereoaudioverstärker zuzuführen. Primär dient das Stereoaudiosignal jedoch einer Bedienperson zum Detektieren, Peilen und Klassifizieren von Zielen. Bevorzugt verwendet die Bedienperson einen Kopfhörer zur Wiedergabe des Stereoaudiosignals, da mittels des Kopfhörers mit nur ein optimierter räumlicher Höreindruck geschaffen werden kann, sondern zugleich durch eine Geräuschkapselung der Kopfhörermuscheln Störgeräusche aus der unmittelbaren Umgebung der Bedienperson weitgehend unterdrückt werden können.

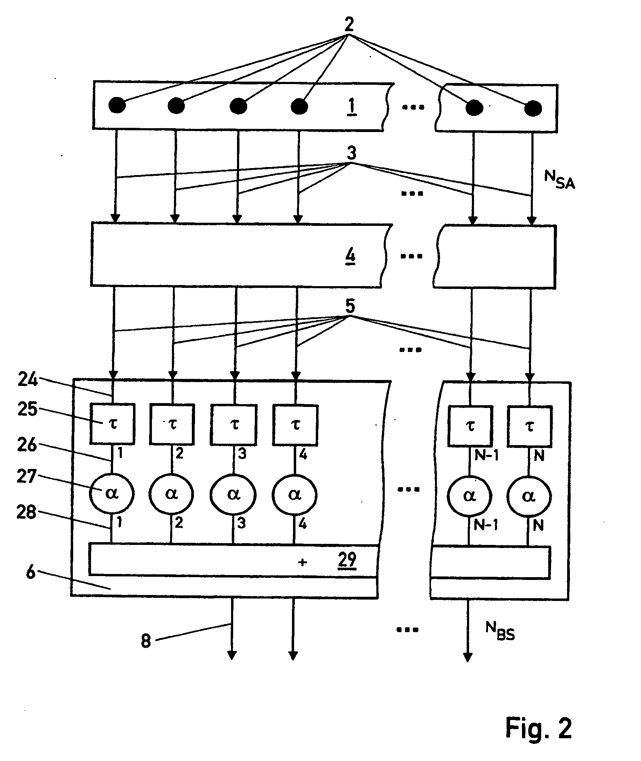

Fig. 2 zeigt schematisch die Generierung von Richtungssignalen 21. An der Empfangsantenne 1 sind die Wasserschallaufnehmer 2 angeordnet. Die Wasserschallaufnehmer 2 haben in der Regel eine Rundumcharakteristik, d.h. sie sind für aus unterschiedlichen Empfangsrichtungen eintreffende Wasserschallsignale gleichermaßen empfindlich. Jeder der $N_{SA}$ Wasserschallaufnehmer 2 wandelt die auf ihn treffenden Wasserschallsignale in analoge Empfangssignale 3 um. Von der Gruppe von $N_{SA}$ Wasserschallaufnehmern 2 werden folglich $N_{SA}$ analoge Empfangssignale 3 bereitgestellt.

Die analogen Empfangssignale 3 werden dem Richtungsbildner 6 zugeführt. Der Richtungsbildner 6 verarbeitet in diesem Fall analoge Signale. Der Richtungsbildner 6 ist aber alternativ oder zusätzlich derart ausgebildet, dass er digitale Signale verarbeiten kann. Dann wandelt der Analogdigitalwandler 4 die $N_{SA}$ analogen Empfangssignale 3 in $N_{SA}$ digitale Empfangssignale 5 und stellt sie dem Richtungsbildner 6 bereit.

Der Richtungsbildner 6 bildet aus dem $N_{SA}$ eingehenden analogen bzw. digitalen Signalen 3 bzw. 5 $N_{BS}$ Richtungssignale 8 für $N_{BS}$ vordefinierte Hauptempfangsrichtungen der Empfangsantenne 1. Zur Bildung jedes der $N_{BS}$ Richtungssignale 8 wird jedes von N Eingangssignalen 24, welche die $N_{SA}$ analogen Empfangssignale 3 bzw. die $N_{SA}$ digitalen Empfangssignale 5 sind, in einer Verzögerungseinrichtung 25 mit τ verzögert. Jedes der N verzögerten Signale 26 wird dann ggf. in einer Gewichtungseinrichtung 27 mit α gewichtet. Die verzögerten und ggf. gewichteten Signale 28 werden anschließend in einer Summationseinrichtung 29 aufsummiert. Ein derart aufsummiertes Signal ist eines der $N_{BS}$ Richtungssignale 8.

Die Verzögerungskoeffizienten τ und die Gewichtungsfaktoren α ergeben sich aus der Geometrie der Empfangsantenne 1 und der Anordnung der Wasserschallaufnehmer 2 auf der Empfangsantenne 1. Mit den Verzögerungskoeffizienten τ werden die Verzögerungen kompensiert, mit welchen eine - aus einer dem gewünschten Richtungssignal 8 zugeordneten Hauptempfangsrichtung kommende - Wellenfront die einzelnen Wasserschallaufnehmer erreicht.

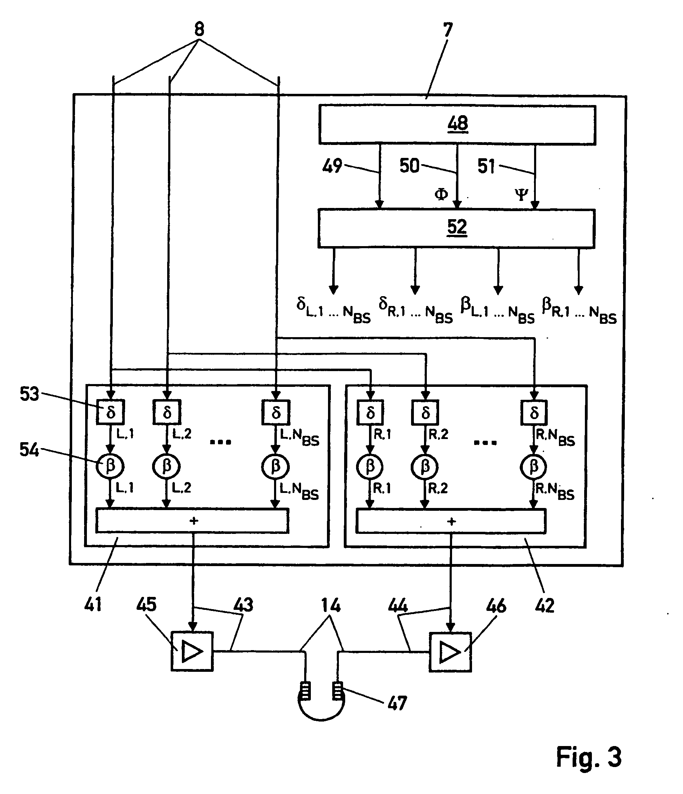

Fig. 3 zeigt schematisch die Signalverarbeitung im Stereomischer 7. In den Stereomischer 7 gehen die Richtungssignale 8 ein. Die Anzahl der Richtungssignale 8 kann $N_{BS}$ betragen. Es können jedoch auch schon vor dem Eingang des Stereomischers 7 Richtungssignale 8 ausgewählt worden sein. Dann kann die Anzahl der Richtungssignale 8 auch kleiner als $N_{BS}$ sein. Der Stereomischers 7 weist eine linke Verarbeitungseinheit 41 und eine rechte Verarbeitungseinheit 42 auf. Die eingehenden Richtungssignale 8 werden sowohl der linken Verarbeitungseinheit 41 als auch der rechten Verarbeitungseinheit 42 bereitgestellt. Die linke Verarbeitungseinheit 41 generiert aus den Richtungssignalen 8 ein Summensignal gewichteter und/oder verzögerter Richtungssignale 8 und stellt es als linkes Audiosignal 43 bereit. Die rechte Verarbeitungseinheit 42 generiert aus den Richtungssignalen 8 ein weiteres Summensignal gewichteter und/oder verzögerter Richtungssignale 8 und stellt es als rechtes Audiosignal 44 bereit. Das linke Audiosignal 43 und das rechte Audiosignal 44 werden Verstärkern 45 und 46 zugeführt und von diesen verstärkt. Die Verstärker 45 und 46 können auch Teile eines gemeinsamen Stereoverstärkers sein. Ggf. können die Verstärker 45 und 46 auch entfallen.

Das ggf. verstärkte linke Audiosignal 43 und das ggf. verstärkte rechte Audiosignal 44 sind als Stereoaudiosignal 14 bspw. einem Kopfhörer 47 bereitstellbar. Alternativ kann das Stereoaudiosignal jedoch auch einer anderen Stereowiedergabeeinrichtung bereitgestellt werden, beispielsweise mittels Zimmerlautsprechern.

Eine Anwendungsverwaltungseinheit 48 sendet Signale für eine Auswahl von Richtungssignalen 49, eine gewählte Haupthorchrichtung $\Phi$ bzw. 50 und/oder einen oder mehrere gewählte Spreizfaktoren $\Psi$ bzw. 51 an eine Koeffizientenberechnungseinheit 52. Die Koeffizientenberechnungseinheit 52 berechnet anhand der eingehenden Steuersignale 49, 50 und 51 $N_{BS}$ Verzögerungskoeffizienten $\delta_L$ zur Verzögerung der eingehenden Richtungssignale 8 in der linken Verarbeitungseinheit 41 und $N_{BS}$ Verzögerungskoeffizienten $\delta_R$ zur Verzögerung der eingehenden Richtungssignale 8 in der rechten Verarbeitungseinheit 42. Darüber hinaus berechnet die Koeffizientenberechnungseinheit 52 $N_{BS}$ Gewichtungsfaktoren $\beta_L$ für die Gewichtung der Richtungssignale 8 in der linken Verarbeitungseinheit 41 und $N_{BS}$ Gewichtungsfaktoren $\beta_R$ zur Gewichtung der Richtungssignale 8 in der rechten Verarbeitungseinheit 42.

In der linken Verarbeitungseinheit 41 wie auch in der rechten Verarbeitungseinheit 42 erfahren die verarbeiteten Richtungssignale 8 jeweils erst eine Verzögerung 53 und dann eine Gewichtung 54. Die Reihenfolge dieser Schritte ist jedoch nicht entscheidend. Die verarbeiteten Richtungssignale 8 können folglich auch erst die Gewichtung 54 und dann die Verzögerung 53 durchlaufen. Auch kann auf die Verzögerung 53 oder die Gewichtung 54 verzichtet werden. Dann ist ein räumlicher akustischer Eindruck an einem vom Stereomischer 7 bereitgestellten Stereoaudiosignal 14 alleine mittels der Gewichtung 54 oder alleine mittels der Verzögerung 53 herstellbar.

Die Verzögerungskoeffizienten $\delta$ und die Gewichtungsfaktoren $\beta$ sind derart beschaffen, dass ein einer Haupthorchrichtung zugeordnetes Richtungssignal 8 in der linken Verarbeitungseinheit 41 gleich gewichtet und verzögert wird, wie in der rechten Verarbeitungseinheit 42.

Richtungssignale 8, welchen Richtcharakteristiken mit Hauptempfangsrichtungen links von der Haupthorchrichtung zugeordnet sind, werden in der rechten Verarbeitungseinheit 42 stärker verzögert als in der linken Verarbeitungseinheit 41. Diese Richtungssignale 8 werden in der linken Verarbeitungseinheit 41 zudem stärker gewichtet als in der rechten Verarbeitungseinheit 42. Entsprechend werden Richtungssignale 8, welchen Richtcharakteristiken mit rechts von der Haupthorchrichtung liegenden Hauptempfangsrichtungen zugeordnet sind, in der linken Verarbeitungseinheit 41 stärker verzögert als in der rechten Verarbeitungseinheit 42 und zudem in der rechten Verarbeitungseinheit 42 stärker gewichtet als in der linken Verarbeitungseinheit 41.

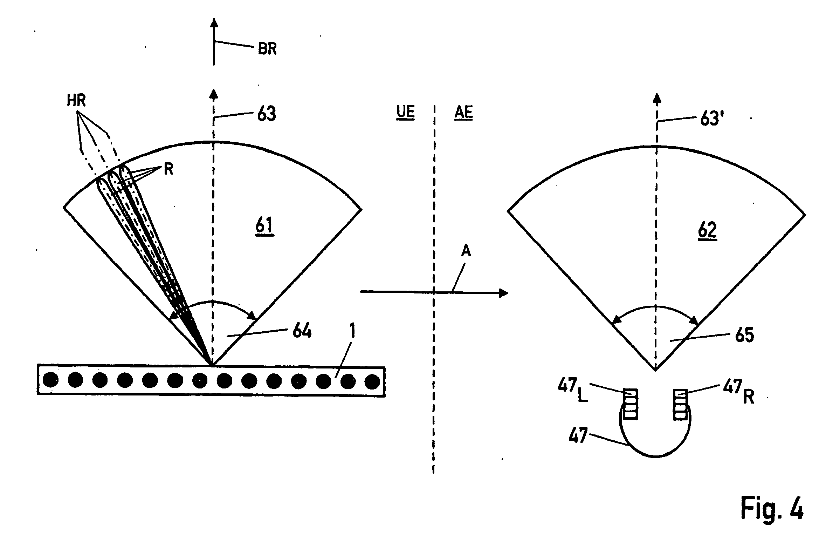

Fig. 4 zeigt die Abbildung A eines Überwachungssektors 61 in einer Überwachungsebene UE auf einen Abbildungssektor 62 in der von dem Stereoaudiosignal 14 akustisch aufspannbaren Abbildungsebene AE gemäß einem Ausführungsbeispiel der Erfindung.

Innerhalb des Überwachungssektors 61 liegt wenigstens eine, vorzugsweise jedoch eine Vielzahl von Richtcharakteristiken R, denen jeweils eine Hauptempfangsrichtung HR zugeordnet ist. Jede Hauptempfangsrichtung HR weist in Richtung des Empfangsmaximums der (in Fig. 4 als Richtcharakteristiken R dargestellten) Hauptkeule der zugeordneten Richtcharakteristik R. Etwaig vorhandene Nebenkeulen mit Nebenempfangsmaxima und diesen Nebenmaxima zugeordneten Nebenempfangsrichtungen sind nicht zeichnerisch dargstellt und werden vorliegend nicht weiter betrachtet.

Die Haupthorchrichtung 63 der Empfangsantenne 1 weist senkrecht zur Längsachse der Empfangsantenne 1, d.h. in Querabrichtung der Empfangsantenne 1, wobei die Querabrichtung eine antennenfeste Bezugsrichtung BR bestimmt. Die Haupthorchrichtung 63 stimmt mit der mittleren Hauptempfangsrichtung der mittels des Richtungsbildners 6 erzeugbaren Richtcharakteristiken überein. Darüber hinaus befindet sich die Haupthorchrichtung 63 in der Mitte des Überwachungssektors 61. Die Haupthorchrichtung 63 teilt damit den Öffnungswinkel 64 des Überwachungssektors 61 in zwei gleich große Teilwinkel.

Das Ausführungsbeispiel zeigt eine 1:1-Abbildung des Überwachungssektors 61 auf den Abbildungssektor 62. Die Haupthorchrichtung 63 wird in eine abgebildete Haupthorchrichtung 63' in die Abbildungsebene AE abgebildet. Die abgebildete Haupthorchrichtung 63' liegt in der Mittelebene zwischen beiden Muscheln $47_L$, $47_R$ des Kopfhörers 47, d.h. in der Ebene, welche die Verbindungslinie der jeweiligen akustischen Zentren der Kopfhörermuscheln $47_L$, $47_R$ in der Mitte dieser Verbindungslinie senkrecht schneidet.

Der Öffnungswinkel 65 des Abbildungssektors 62 ist gleich dem Öffnungswinkel 64 des Überwachungssektors 61. Der ggf. gewählte Spreizfaktor $\Psi$ hat den Wert 1. Der Öffnungswinkel 64 des Überwachungssektors 61 kann im Unterschied zum Ausführungsbeispiel auch kleiner oder größer als der dort dargestellte Öffnungswinkel 64 sein.

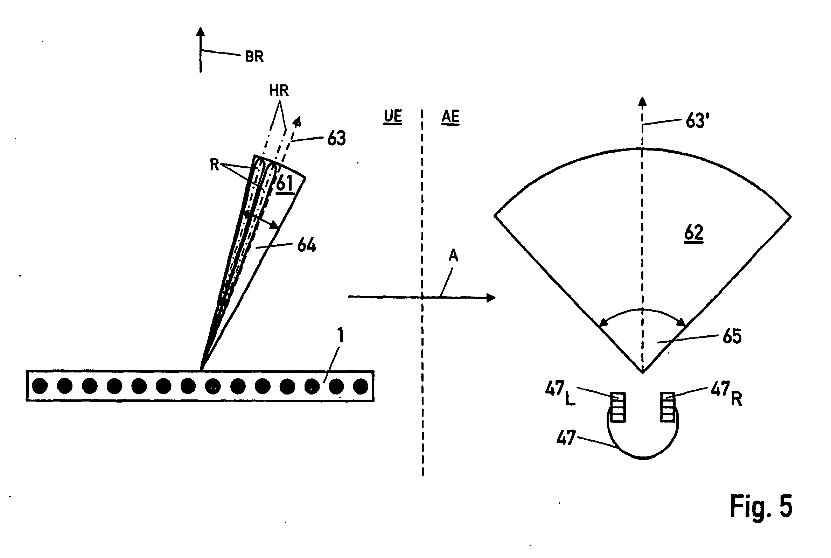

Fig. 5 zeigt ein weiteres Ausführungsbeispiel der Erfindung. Das Ausführungsbeispiel 5 unterscheidet sich von dem Ausführungsbeispiel gemäß Fig. 4 dadurch, dass der Öffnungswinkel 64 des Überwachungssektors 61 gegenüber dem Öffnungswinkel 64 im Ausführungsbeispiel gemäß Fig. 4 kleiner ist. Dadurch verringert sich auch die Anzahl der im Überwachungssektors 61 liegenden Richtcharakteristiken R. Die Haupthorchrichtung 63 befindet sich wiederum in der Mitte des Überwachungssektors 61. Jedoch ist die Haupthorchrichtung 63 nicht mehr die mittlere Hauptempfangsrichtung der Empfangsantenne 1. Der Haupthorchrichtung 63 ist vielmehr gegenüber der mittleren Hauptempfangsrichtung verschwenkt. Gleichwohl liegt die abgebildete Haupthorchrichtung 63' wieder in der Mittelebene zwischen beiden Muscheln $47_L$, $47_R$ des Kopfhörers 47.

Ferner ist nunmehr der Öffnungswinkel 65 des Abbildungssektors 62 ungleich dem Öffnungswinkel 64 des Überwachungssektors 61. Der Öffnungswinkel 65 des Abbildungssektors 62 ist nämlich größer als der Öffnungswinkel 64 des Überwachungssektors 61. Der Spreizfaktor Ψ ist daher größer als 1.

Aus der Vergrößerung des Öffnungswinkels 64 bei der Abbildung ergibt sich die Funktion einer akustischen Lupe bzw. Audio-Lupe. Im Abbildungssektor 62 abgebildete im zugeordneten Überwachungssektor 61 liegende Hauptempfangsrichtungen werden aufgespreizt und damit entzerrt dargestellt. Folglich sind insbesondere dicht beieinander liegende Schallquellen besser voneinander unterscheidbar.

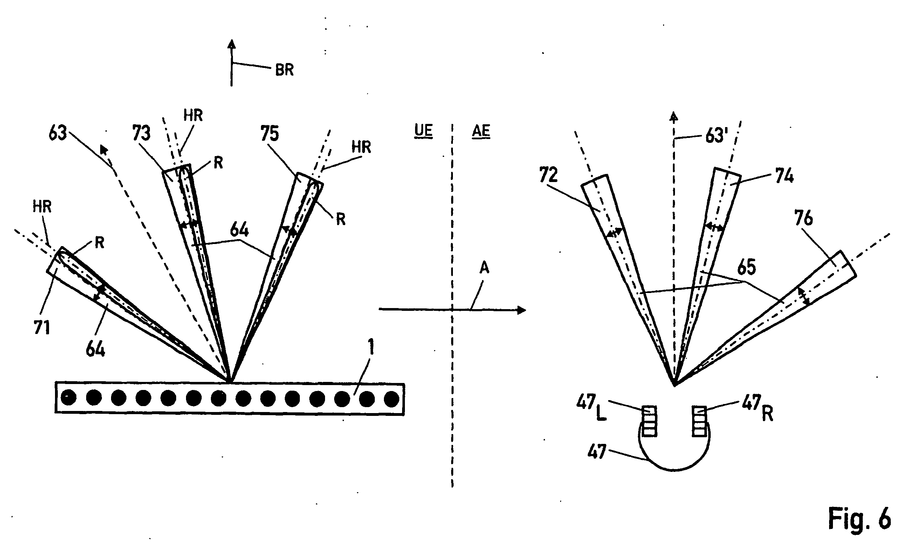

Fig. 6 zeigt ein weiteres Ausführungsbeispiel der Erfindung. Im Unterschied zu Fig. 4 und Fig. 5 zeigt Fig. 6 die Abbildung von mehreren ausgewählten Überwachungssektoren in der Überwachungsebene auf ebenso viele Abbildungssektoren in der Abbildungsebene. Ein erster Überwachungssektor 71 wird dabei auf einen ersten Abbildungssektor 72 abgebildet. Ein zweiter Überwachungssektor 73 wird auf einen zweiten Abbildungssektor 74 abgebildet. Ein dritter Überwachungssektor 75 wird auf einen dritten Abbildungssektor 76 abgebildet. Die Überwachungssektoren 71, 73 und 75 sind frei wählbar. Jeder Überwachungssektor weist wiederum eine oder mehrere Richtcharakteristiken R mit jeweils einer zugeordneten Hauptempfangsrichtung HR auf.

Unabhängig von diesen Überwachungssektoren 71, 73, 75 ist eine Haupthorchrichtung 63 auswählbar. In Fig. 6 liegt die Haupthorchrichtung 63 nicht innerhalb eines Überwachungssektors 71, 73, 75 sondern außerhalb dieser Überwachungssektoren. Alternativ kann die Haupthorchrichtung 63 jedoch auch derart gewählt werden, dass sie innerhalb eines Überwachungssektors liegt. Gleichwohl liegt die abgebildete Haupthorchrichtung 63' wieder in der Mittelebene zwischen beiden Muscheln $47_L$, $47_R$ des Kopfhörers 47.

Die Lage der den Überwachungssektoren 71, 73, 75 zugeordneten Abbildungssektoren 72, 74, 76 in der vom Stereoaudiosignal aufgespannten Abbildungsebene ergibt sich aus der Lage der Überwachungssektoren 71, 73, 75 relativ zur Haupthorchrichtung 63. Die Öffnungswinkel 64 der Überwachungssektoren 71, 73, 75 sind in Fig. 6 gleich den Öffnungswinkeln 65 der Abbildungssektoren 72, 74, 76. Der Spreizfaktor Ψ beträgt folglich jeweils 1.

In Abweichung zu Fig. 6 können die Öffnungswinkel 64 der Überwachungssektoren 71, 73, 75 unterschiedlich groß gewählt werden. In entsprechender Weise kann daher auch die Anzahl der Richtcharakteristiken R in jedem Überwachungssektor 71, 73, 75 unterschiedlich groß gewählt werden. Ebenso können die Öffnungswinkel 65 der Abbildungssektoren 72, 74, 76 unterschiedlich groß sein. Zudem können auch die Verhältnisse der Öffnungswinkel 64 der Überwachungssektoren 71, 73, 75 zu den Öffnungswinkeln 65 der Abbildungssektoren 72, 74, 76 für verschiedene Überwachungssektoren 61 und Abbildungssektoren 62 unterschiedlich sein. D.h. die Erfindung kann so ausgeführt sein, dass für die Abbildung unterschiedlicher Überwachungssektoren 71, 73, 75 auf Abbildungssektoren 72, 74, 76 unterschiedliche Spreizfaktoren Ψ wählbar sind. Ein Spreizfaktor Ψ kann dabei den Wert 1 für eine 1:1-Abbildung, den Wert einer positiven reellen Zahl größer als 1 für eine Vergrößerung oder den Wert einer positiven reellen Zahl kleiner als 1 für eine Verkleinerung eines Öffnungswinkels 64 bei der Abbildung eines Überwachungssektors 61 auf einen Abbildungssektor 62 annehmen.

Mittels der vorstehend beschriebenen Sonaranlage können Peilwinkel zu Zielen ermittelt werden. Zwar ergeben sich derartige Peilwinkel zunächst relativ zur antennenfesten Bezugsrichtung BR (siehe Fig. 4 bis 6). Jedoch werden diese Peilwinkel unter Berücksichtigung des sogenannten Headings des Wasserfahrzeugs, auf das u.a. der Kurs des Wasserfahrzeugs, die Windrichtung und Windstärke sowie die Meeresströmung Einfluss haben, sowie von Kompassdaten in nordbezogene oder auf eine andere feste Himmelsrichtung bezogene Peilwinkel umgerechnet.

Die vorliegende Erfindung wurde zwar anhand einer Linearantenne beschrieben. Sie ist jedoch auch bei beliebigen anderen Antennenkonfigurationen anwendbar, wie Zylinderbasen, Hufeisenbasen, etc.

Alle in der vorstehenden Beschreibung sowie in den Ansprüchen genannten Merkmale sind erfindungsgemäß sowohl einzeln als auch in beliebiger Kombination miteinander einsetzbar. Die Erfindung ist daher nicht auf die beschriebenen bzw. beanspruchten Merkmalskombinationen beschränkt. Vielmehr sind alle Kombinationen von Einzelmerkmalen als offenbart zu betrachten.

**Patentansprüche**

1. Vorrichtung zur Generierung eines Stereoaudiosignals (14) aus mittels einer Sogaranlage empfangbaren Wasserschallsignalen, wobei

   a) die Sonaranlage eine Empfangsantenne (1) mit einer antennenfesten Bezugsrichtung (BR) und einer Vielzahl von Wasserschallaufnehmern (2), einen Richtungsbildner (6) und einen Stereomischer (7) aufweist,
   b) von der Vielzahl von Wasserschallaufnehmern (2) aus den Wasserschallsignalen gewonnene Empfangssignale (3, 5) dem Richtungsbildner (6) bereitstellbar sind,
   c) vom Richtungsbildner (6) Richtungssignale (8) durch richtungsabhängige zeitliche Verzögerung und konphase Aufsummierung der Empfangssignale (3, 5) generierbar und dem Stereomischer (7) bereitstellbar sind,

d) jedem Richtungssignal (8) in Abhängigkeit der jeweiligen zeitlichen Verzögerungen eine Hauptempfangsrichtung (HR) zugeordnet ist, die in einer akustisch überwachten Überwachungsebene (UE) liegt und gegenüber der Bezugsrichtung (BR) geschwenkt ist, ggf. mit Ausnahme eines Richtungssignals (8), dessen zugeordnete Hauptempfangsrichtung (HR) mit der Bezugsrichtung (BR) übereinstimmt,

e) in der Überwachungsebene (UE) eine Haupthorchrichtung (63) sowie wenigstens ein Überwachungssektor (61) liegen, in dem eine oder eine Mehrzahl benachbarter Hauptempfangsrichtungen (HR) liegen und dem ein Abbildungssektor (62) in einer vom dem Stereoaudiosignal (14) aufgespannten Abbildungsebene (AE) zugeordnet ist,

f) mittels des Stereomischers (7) ein linkes Audiosignal (43) und ein rechtes Audiosignal (44) des Stereoaudiosignals (14) zur Wiedergabe mittels einer akustischen Stereowiedergabeeinrichtung (13) generierbar und beide Audiosignale (43, 44) Summensignale gewichteter und verzögerter Richtungssignale (8) aufweisen und

g) vom Stereomischer (7) das bzw. die der Haupthorchrichtung (63) zugeordneten Richtungssignale (8) gleich gewichtet sowie unverzögert oder gleich verzögert zur Bildung des linken und des rechten Audiosignals (43, 44) verarbeitbar sind, während vom Stereomischer (7) Richtungssignale (8) mit links von der Haupthorchrichtung (63) liegenden Hauptempfangsrichtungen (HR) zur Bildung des linken Audiosignals (43) weniger verzögert und höher gewichtet als zur Bildung des rechten Audiosignals (44) verarbeitbar sind, während vom Stereomischer (7) Richtungssignale (8) mit rechts von der Haupthorchrichtung (63) liegenden Hauptempfangsrichtungen (HR) zur Bildung des rechten Audiosignals (43) weniger verzögert und höher gewichtet als zur Bildung des linken Audiosignals (44) verarbeitbar sind, und

h) ein oder mehrere Überwachungssektoren (61) auswählbar und in eine der Anzahl der Überwachungssektoren (61) entsprechende Anzahl von Abbildungssektoren (62) akustisch abbildbar sind, wobei der Stereomischer (7) derart ausgebildet ist, dass er nur diejenigen Richtungssignale (8) zur Bildung des linken Audiosignals (43) und zur Bildung des rechten Audiosignals (44) verarbeitet, deren Hauptempfangsrichtungen (HR) in dem bzw. den ausgewählten Überwachungssektoren (61) liegen, **dadurch gekennzeichnet, dass**

i) die Gewichtung der Richtungssignale (8) zur Bildung des linken Audiosignals (43) und des rechten Audiosignals (44) mittels Gewichtungsfaktoren $\beta$ erfolgt, wobei für die Bildung des linken Audiosignals (43) ein m-tes Richtungssignal (8) mit

$$\beta_{L,m} = \begin{cases} 1 & \text{für } ((\phi_m - \Phi)\cdot\Psi) \geq -90° \; und \; ((\phi_m - \Phi)\cdot\Psi) \leq 0° \\ \cos((\phi_m - \Phi)\cdot\Psi \cdot \frac{\pi}{180°}) & \text{für } ((\phi_m - \Phi)\cdot\Psi) > 0° \; und \; ((\phi_m - \Phi)\cdot\Psi) \geq 90° \\ 0 & sonst \end{cases}$$

und für die Bildung des rechten Audiosignals (44) das m-te Richtungssignal (8) mit

$$\beta_{R,m} = \begin{cases} 1 & \text{für } ((\phi_m - \Phi)\cdot\Psi) \leq 90° \; und \; ((\phi_m - \Phi)\cdot\Psi) \geq 0° \\ \cos((\phi_m - \Phi)\cdot\Psi \cdot \frac{\pi}{180°}) & \text{für } ((\phi_m - \Phi)\cdot\Psi) < 0° \; und \; ((\phi_m - \Phi)\cdot\Psi) \geq -90° \\ 0 & sonst \end{cases}$$

gewichtet wird, wobei $\phi_m$ die dem m-ten Richtungssignal (8) zugeordnete Hauptempfangsrichtung, $\Phi$ die Haupthorchrichtung (63) und $\Psi$ einen Spreizfaktor bezeichnet.

**2.** Vorrichtung zur Generierung eines Stereoaudiosignals (14) aus mittels einer Sonaranlage empfangbaren Wasserschallsignalen, wobei

a) die Sonaranlage eine Empfangsantenne (1) mit einer antennenfesten Bezugsrichtung (BR) und einer Vielzahl von Wasserschallaufnehmern (2), einen Richtungsbildner (6) und einen Stereomischer (7) aufweist,

b) von der Vielzahl von Wasserschallaufnehmern (2) aus den Wasserschallsignalen gewonnene Empfangssignale (3, 5) dem Richtungsbildner (6) bereitstellbar sind,

c) vom Richtungsbildner (6) Richtungssignale (8) durch richtungsabhängige zeitliche Verzögerung und konphase Aufsummierung der Empfangssignale (3, 5) generierbar und dem Stereomischer (7) bereitstellbar sind,

d) jedem Richtungssignal (8) in Abhängigkeit der jeweiligen zeitlichen Verzögerungen eine Hauptempfangsrichtung (HR) zugeordnet ist, die in einer akustisch überwachten Überwachungsebene (UE) liegt und gegenüber der Bezugsrichtung (BR) geschwenkt ist, ggf. mit Ausnahme eines Richtungssignals (8), dessen zugeordnete Hauptempfangsrichtung (HR) mit der Bezugsrichtung (BR) übereinstimmt,

e) in der Überwachungsebene (UE) eine Haupthorchrichtung (63) sowie wenigstens ein Überwachungssektor (61) liegen, in dem eine oder eine Mehrzahl benachbarter Hauptempfangsrichtungen (HR) liegen und dem ein Abbildungssektor (62) in einer vom dem Stereoaudiosignal (14) aufgespannten Abbildungsebene (AE) zugeordnet ist,

f) mittels des Stereomischers (7) ein linkes Audiosignal (43) und ein rechtes Audiosignal (44) des Stereoaudiosignals (14) zur Wiedergabe mittels einer akustischen Stereowiedergabeeinrichtung (13) generierbar und beide Audiosignale (43, 44) Summensignale gewichteter und verzögerter Richtungssignale (8) aufweisen und

g) vom Stereomischer (7) das bzw. die der Haupthorchrichtung (63) zugeordneten Richtungssignale (8) gleich gewichtet sowie unverzögert oder gleich verzögert zur Bildung des linken und des rechten Audiosignals (43, 44) verarbeitbar sind, während vom Stereomischer (7) Richtungssignale (8) mit links von der Haupthorchrichtung (63) liegenden Hauptempfangsrichtungen (HR) zur Bildung des linken Audiosignals (43) weniger verzögert und höher gewichtet als zur Bildung des rechten Audiosignals (44) verarbeitbar sind, während vom Stereomischer (7) Richtungssignale (8) mit rechts von der Haupthorchrichtung (63) liegenden Hauptempfangsrichtungen (HR) zur Bildung des rechten Audiosignals (43) weniger verzögert und höher gewichtet als zur Bildung des linken Audiosignals (44) verarbeitbar sind, und

h) ein oder mehrere Überwachungssektoren (61) auswählbar und in eine der Anzahl der Überwachungssektoren (61) entsprechende Anzahl von Abbildungssektoren (62) akustisch abbildbar sind, wobei der Stereomischer (7) derart ausgebildet ist, dass er nur diejenigen Richtungssignale (8) zur Bildung des linken Audiosignals (43) und zur Bildung des rechten Audiosignals (44) verarbeitet, deren Hauptempfangsrichtungen (HR) in dem bzw. den ausgewählten Überwachungssektoren (61) liegen, **dadurch gekennzeichnet, dass**

i) eine zeitliche Verzögerung der Richtungssignale (8) zur Bildung des linken Audiosignals (43) und des rechten Audiosignals (44) mittels Verzögerungskoeffizienten δ erfolgt, wobei für die Bildung des linken Audiosignals (43) ein m-tes Richtungssignal (8) mit

$$\delta_{L,m} = \frac{D}{2 \cdot v_{air}} \cdot \sin\left( \psi \cdot (\phi_m - \Phi) \cdot \frac{\pi}{180°} \right); \text{ mit } m = \{1,2,...,N_{BS}\}$$

und für die Bildung des rechten Audiosignals (44) das m-te Richtungssignal (8) mit

$$\delta_{R,m} = -\frac{D}{2 \cdot v_{air}} \cdot \sin\left( \psi \cdot (\phi_m - \Phi) \cdot \frac{\pi}{180°} \right); \text{ mit } m = \{1,2,..., N_{BS}\}$$

verzögert wird, wobei D einen angenommenen Abstand zwischen zwei Ohren eines Menschen, $v_{air}$ die Schallgeschwindigkeit in Luft, Ψ einen Spreizfaktor, $\phi_m$ die dem m-ten Richtungssignal (8) zugeordnete Hauptempfangsrichtung (HR) und Φ die Haupthorchrichtung (63) bezeichnet.

3. Vorrichtung zur Generierung eines Stereoaudiosignals (14) aus mittels einer Sonaranlage empfangbaren Wasserschallsignalen, wobei

a) die Sonaranlage eine Empfangsantenne (1) mit einer antennenfesten Bezugsrichtung (BR) und einer Vielzahl von Wasserschallaufnehmern (2), einen Richtungsbildner (6) und einen Stereomischer (7) aufweist,

b) von der Vielzahl von Wasserschallaufnehmern (2) aus den Wasserschallsignalen gewonnene Empfangssignale (3, 5) dem Richtungsbildner (6) bereitstellbar sind,

c) vom Richtungsbildner (6) Richtungssignale (8) durch richtungsabhängige zeitliche Verzögerung und konphase Aufsummierung der Empfangssignale (3, 5) generierbar und dem Stereomischer (7) bereitstellbar sind,

d) jedem Richtungssignal (8) in Abhängigkeit der jeweiligen zeitlichen Verzögerungen eine Hauptempfangsrichtung (HR) zugeordnet ist, die in einer akustisch überwachten Überwachungsebene (UE) liegt und gegenüber der Bezugsrichtung (BR) geschwenkt ist, ggf. mit Ausnahme eines Richtungssignals (8), dessen zugeordnete Hauptempfangsrichtung (HR) mit der Bezugsrichtung (BR) übereinstimmt,

e) in der Überwachungsebene (UE) eine Haupthorchrichtung (63) sowie wenigstens ein Überwachungssektor (61) liegen, in dem eine oder eine Mehrzahl benachbarter Hauptempfangsrichtungen (HR) liegen und dem ein Abbildungssektor (62) in einer vom dem Stereoaudiosignal (14) aufgespannten Abbildungsebene (AE) zugeordnet ist,

f) mittels des Stereomischers (7) ein linkes Audiosignal (43) und ein rechtes Audiosignal (44) des Stereoaudiosignals (14) zur Wiedergabe mittels einer akustischen Stereowiedergabeeinrichtung (13) generierbar und beide Audiosignale (43, 44) Summensignale gewichteter und verzögerter Richtungssignale (8) aufweisen und

g) vom Stereomischer (7) das bzw. die der Haupthorchrichtung (63) zugeordneten Richtungssignale (8) gleich gewichtet sowie unverzögert oder gleich verzögert zur Bildung des linken und des rechten Audiosignals (43, 44) verarbeitbar sind, während vom Stereomischer (7) Richtungssignale (8) mit links von der Haupthorchrichtung (63) liegenden Hauptempfangsrichtungen (HR) zur Bildung des linken Audiosignals (43) weniger verzögert und höher gewichtet als zur Bildung des rechten Audiosignals (44) verarbeitbar sind,

während vom Stereomischer (7) Richtungssignale (8) mit rechts von der Haupthorchrichtung (63) liegenden Hauptempfangsrichtungen (HR) zur Bildung des rechten Audiosignals (43) weniger verzögert und höher gewichtet als zur Bildung des linken Audiosignals (44) verarbeitbar sind, und

h) ein oder mehrere Überwachungssektoren (61) auswählbar und in eine der Anzahl der Überwachungssektoren (61) entsprechende Anzahl von Abbildungssektoren (62) akustisch abbildbar sind, wobei der Stereomischer (7) derart ausgebildet ist, dass er nur diejenigen Richtungssignale (8) zur Bildung des linken Audiosignals (43) und zur Bildung des rechten Audiosignals (44) verarbeitet, deren Hauptempfangsrichtungen (HR) in dem bzw. den ausgewählten Überwachungssektoren (61) liegen, **dadurch gekennzeichnet, dass**

i) die Gewichtung der Richtungssignale (8) zur Bildung des linken Audiosignals (43) und des rechten Audiosignals (44) mittels Gewichtungsfaktoren $\beta$ erfolgt, wobei für die Bildung des linken Audiosignals (43) ein m-tes Rich-tungssignal (8) mit

$$\beta_{L,m} = \begin{cases} 1 & \text{für } ((\phi_m - \Phi) \cdot \Psi) \geq -90° \text{ und } ((\phi_m - \Phi) \cdot \Psi) \leq 0° \\ \cos((\phi_m - \Phi) \cdot \Psi \cdot \frac{\pi}{180°}) & \text{für } ((\phi_m - \Phi) \cdot \Psi) > 0° \text{ und } ((\phi_m - \Phi) \cdot \Psi) \geq 90° \\ 0 & \text{sonst} \end{cases}$$

und für die Bildung des rechten Audiosignals (44) das m-te Richtungssignal (8) mit

$$\beta_{R,m} = \begin{cases} 1 & \text{für } ((\phi_m - \Phi) \cdot \Psi) \leq 90° \text{ und } ((\phi_m - \Phi) \cdot \Psi) \geq 0° \\ \cos((\phi_m - \Phi) \cdot \Psi \cdot \frac{\pi}{180°}) & \text{für } ((\phi_m - \Phi) \cdot \Psi) < 0° \text{ und } ((\phi_m - \Phi) \cdot \Psi) \geq -90° \\ 0 & \text{sonst} \end{cases}$$

gewichtet wird, wobei $\phi_m$ die dem m-ten Richtungssignal (8) zugeordnete Hauptempfangsrichtung, $\Phi$ die Haupt-horchrichtung (63) und $\Psi$ einen Spreizfaktor bezeichnet und

j) eine zeitliche Verzögerung der Richtungssignale (8) zur Bildung des linken Audiosignals (43) und des rechten Audiosignals (44) mittels Verzögerungskoeffizienten $\delta$ erfolgt, wobei für die Bildung des linken Audiosignals (43) ein m-tes Richtungssignal (8) mit

$$\delta_{L,m} = \frac{D}{2 \cdot v_{air}} \cdot \sin\left(\psi \cdot (\phi_m - \Phi) \cdot \frac{\pi}{180°}\right); \text{ mit } m = \{1,2,...,N_{BS}\}$$

und für die Bildung des rechten Audiosignals (44) das m-te Richtungssignal (8) mit

$$\delta_{R,m} = -\frac{D}{2 \cdot v_{air}} \cdot \sin\left(\psi \cdot (\phi_m - \Phi) \cdot \frac{\pi}{180°}\right); \text{ mit } m = \{1,2,..., N_{BS}\}$$

verzögert wird, wobei D einen angenommenen Abstand zwischen zwei Ohren eines Menschen, $v_{air}$ die Schall-geschwindigkeit in Luft, $\Psi$ den Spreizfaktor, $\phi_m$ die dem m-ten Richtungssignal (8) zugeordnete Hauptempfangsrichtung (HR) und Φ die Haupthorchrichtung (63) bezeichnet.

4.  Vorrichtung nach einem der vorhergehenden Ansprüche,
    **dadurch gekennzeichnet, dass**
    die Haupthorchrichtung (63) einer

    a) in der Mitte aller Hauptempfangsrichtungen (HR) liegenden mittleren Hauptempfangsrichtung oder
    b) in der Mitte aller einem Überwachungssektor (61) zugeordneten Hauptempfangsrichtungen (HR) liegenden mittleren Hauptempfangsrichtung zugeordnet ist.

5.  Vorrichtung nach einem der Ansprüche 1 bis 3,
    **dadurch gekennzeichnet, dass**
    die Haupthorchrichtung (63) wählbar, insbesondere gegenüber der antennenfesten Bezugsrichtung (BR) schwenkbar, ist.

6.  Vorrichtung nach einem der vorhergehenden Ansprüche,
    **dadurch gekennzeichnet, dass**
    der Öffnungswinkel (65) des bzw. eines Abbildungssektors (62) gleich dem Öffnungswinkel (64) des bzw. eines zugeordneten Überwachungssektors (61) ist.

7.  Vorrichtung nach einem der Ansprüche 1 bis 5,
    **dadurch gekennzeichnet, dass**
    der Öffnungswinkel (65) des bzw. eines Abbildungssektors (62) gleich dem Öffnungswinkel (64) oder größer oder kleiner als der Öffnungswinkel (64) des bzw. eines zugeordneten Überwachungssektors (61) wählbar, insbesondere veränderbar, ist, indem ein Spreizfaktor Ψ wählbar ist, welcher das Verhältnis des Öffnungswinkels (65) dieses Abbildungssektors (62) zum Öffnungswinkel (64) des zugeordneten Überwachungssektors (61) angibt, wobei der Spreizfaktor Ψ insbesondere eine positive reelle Zahl ist.

8.  Vorrichtung nach einem der vorhergehenden Ansprüche,
    **gekennzeichnet durch**
    eine Zielverfolgungseinrichtung zur automatischen Auswahl des oder der Überwachungssektoren (61) und/oder eines oder mehrerer Richtungssignale (8).

9.  Verfahren zum Generieren eines Stereoaudiosignals (14) aus mittels einer Sonaranlage empfangenen Wasserschallsignalen, wobei

    a) die Sonaranlage eine Empfangsantenne (1) mit einer antennenfesten Bezugsrichtung (BR) und einer Vielzahl von Wasserschallaufnehmern (2), einen Richtungsbildner (6) und einen Stereomischer (7) aufweist,
    b) die Vielzahl von Wasserschallaufnehmern (2) Empfangssignale (3, 5) aus Wasserschallsignalen gewinnt und dem Richtungsbildner (6) bereitstellt,
    c) der Richtungsbildner (6) mittels richtungsabhängiger zeitlicher Verzögerung und konphaser Aufsummierung der Empfangssignale (3, 5) Richtungssignale (8) generiert und dem Stereomischer (7) bereitstellt,
    d) jedem Richtungssignal (8) in Abhängigkeit der jeweiligen zeitlichen Verzögerungen eine Hauptempfangsrichtung (HR) zugeordnet ist, die in einer akustisch überwachten Überwachungsebene (UE) liegt und gegenüber der Bezugsrichtung (BR) geschwenkt ist, ggf. mit Ausnahme eines Richtungssignals (8), dessen zugeordnete Hauptempfangsrichtung (HR) mit der Bezugsrichtung (BR) übereinstimmt,
    e) in der Überwachungsebene (UE) eine Haupthorchrichtung (63) sowie wenigstens ein Überwachungssektor (61) liegen, in dem eine oder eine Mehrzahl benachbarter Hauptempfangsrichtungen (HR) liegen und dem ein Abbildungssektor (62) in einer vom dem Stereoaudiosignal (14) aufgespannten Abbildungsebene (AE) zugeordnet ist,
    f) der Stereomischer (7) ein linkes Audiosignal (43) und ein rechtes Audiosignal (44) des Stereoaudiosignals (14) zur Wiedergabe mittels einer akustischen Stereowiedergabeeinrichtung (13) generiert, wobei beide Audiosignale (43, 44) Summensignale gewichteter und verzögerter Richtungssignale (8) aufweisen,
    g) der Stereomischer (7) das bzw. die der Haupthorchrichtung (63) zugeordneten Richtungssignale (8) gleich gewichtet sowie unverzögert oder gleich verzögert zur Bildung des linken und des rechten Audiosignals (43, 44) verarbeiten kann, während vom Stereomischer (7) Richtungssignale (8) mit links von der Haupthorchrichtung liegenden Hauptempfangsrichtungen (HR) zur Bildung des linken Audiosignals (43) weniger verzögert und höher gewichtet als zur Bildung des rechten Audiosignals (44) verarbeitet werden können,

während vom Stereomischer (7) Richtungssignale (8) mit rechts von der Haupthorchrichtung (63) liegenden Hauptempfangsrichtungen (HR) zur Bildung des rechten Audiosignals (43) weniger verzögert und höher gewichtet als zur Bildung des linken Audiosignals (44) verarbeitet werden können, wobei

h) ein oder mehrere Überwachungssektoren (61) auswählbar und in eine der Anzahl der Überwachungssektoren (61) entsprechende Anzahl von Abbildungssektoren (62) akustisch abbildbar sind, wobei der Stereomischer (7) nur diejenigen Richtungssignale (8) zur Bildung des linken Audiosignals (43) und zur Bildung des rechten Audiosignals (44) verarbeitet, deren Hauptempfangsrichtungen (HR) in dem bzw. den ausgewählten Überwachungssektoren (61) liegen,

**dadurch gekennzeichnet, dass**

i) Gewichtungsfaktoren β die Richtungssignale (8) für die Bildung des linken Audiosignals (43) und für die Bildung des rechten Audiosignals (44) gewichten, wobei für die Bildung des linken Audiosignals (43) ein m-tes Richtungssignal (8) mit

$$\beta_{L,m} = \begin{cases} 1 & \textit{für } ((\phi_m - \Phi)\cdot\Psi) \geq -90° \textit{ und } ((\phi_m - \Phi)\cdot\Psi) \leq 0° \\ \cos((\phi_m - \Phi)\cdot\Psi\cdot\frac{\pi}{180°}) & \textit{für } ((\phi_m - \Phi)\cdot\Psi) > 0° \textit{ und } ((\phi_m - \Phi)\cdot\Psi) \geq 90° \\ 0 & \textit{sonst} \end{cases}$$

und für die Bildung des rechten Audiosignals (44) das m-te Richtungssignal (8) mit

$$\beta_{R,m} = \begin{cases} 1 & \textit{für } ((\phi_m - \Phi)\cdot\Psi) \leq 90° \textit{ und } ((\phi_m - \Phi)\cdot\Psi) \geq 0° \\ \cos((\phi_m - \Phi)\cdot\Psi\cdot\frac{\pi}{180°}) & \textit{für } ((\phi_m - \Phi)\cdot\Psi) < 0° \textit{ und } ((\phi_m - \Phi)\cdot\Psi) \geq -90° \\ 0 & \textit{sonst} \end{cases}$$

gewichtet wird, wobei $\phi_m$ die dem m-ten Richtungssignal (8) zugeordnete Hauptempfangsrichtung, $\Phi$ die Haupthorchrichtung (63) und $\Psi$ einen Spreizfaktor bezeichnet.

10. Verfahren zum Generieren eines Stereoaudiosignals (14) aus mittels einer Sonaranlage empfangenen Wasserschallsignalen, wobei

a) die Sonaranlage eine Empfangsantenne (1) mit einer antennenfesten Bezugsrichtung (BR) und einer Vielzahl von Wasserschallaufnehmern (2), einen Richtungsbildner (6) und einen Stereomischer (7) aufweist,
b) die Vielzahl von Wasserschallaufnehmern (2) Empfangssignale (3, 5) aus Wasserschallsignalen gewinnt und dem Richtungsbildner (6) bereitstellt,
c) der Richtungsbildner (6) mittels richtungsabhängiger zeitlicher Verzögerung und konphaser Aufsummierung der Empfangssignale (3, 5) Richtungssignale (8) generiert und dem Stereomischer (7) bereitstellt,
d) jedem Richtungssignal (8) in Abhängigkeit der jeweiligen zeitlichen Verzögerungen eine Hauptempfangsrichtung (HR) zugeordnet ist, die in einer akustisch überwachten Überwachungsebene (UE) liegt und gegenüber der Bezugsrichtung (BR) geschwenkt ist, ggf. mit Ausnahme eines Richtungssignals (8), dessen zugeordnete Hauptempfangsrichtung (HR) mit der Bezugsrichtung (BR) übereinstimmt,
e) in der Überwachungsebene (UE) eine Haupthorchrichtung (63) sowie wenigstens ein Überwachungssektor (61) liegen, in dem eine oder eine Mehrzahl benachbarter Hauptempfangsrichtungen (HR) liegen und dem ein Abbildungssektor (62) in einer vom dem Stereoaudiosignal (14) aufgespannten Abbildungsebene (AE) zugeordnet ist,
f) der Stereomischer (7) ein linkes Audiosignal (43) und ein rechtes Audiosignal (44) des Stereoaudiosignals (14) zur Wiedergabe mittels einer akustischen Stereowiedergabeeinrichtung (13) generiert, wobei beide Audiosignale (43, 44) Summensignale gewichteter und verzögerter Richtungssignale (8) aufweisen,
g) der Stereomischer (7) das bzw. die der Haupthorchrichtung (63) zugeordneten Richtungssignale (8) gleich gewichtet sowie unverzögert oder gleich verzögert zur Bildung des linken und des rechten Audiosignals (43, 44) verarbeiten kann, während vom Stereomischer (7) Richtungssignale (8) mit links von der Haupthorchrichtung liegenden Hauptempfangsrichtungen (HR) zur Bildung des linken Audiosignals (43) weniger verzögert und höher gewichtet als zur Bildung des rechten Audiosignals (44) verarbeitet werden können,
während vom Stereomischer (7) Richtungssignale (8) mit rechts von der Haupthorchrichtung (63) liegenden Hauptempfangsrichtungen (HR) zur Bildung des rechten Audiosignals (43) weniger verzögert und höher gewichtet als zur Bildung des linken Audiosignals (44) verarbeitet werden können, wobei

h) ein oder mehrere Überwachungssektoren (61) auswählbar und in eine der Anzahl der Überwachungssektoren (61) entsprechende Anzahl von Abbildungssektoren (62) akustisch abbildbar sind, wobei der Stereomischer (7) nur diejenigen Richtungssignale (8) zur Bildung des linken Audiosignals (43) und zur Bildung des rechten Audiosignals (44) verarbeitet, deren Hauptempfangsrichtungen (HR) in dem bzw. den ausgewählten Überwachungssektoren (61) liegen, **dadurch gekennzeichnet, dass**

i) Richtungssignale für die Bildung des linken Audiosignals (43) und für die Bildung des rechten Audiosignals (44) mittels Verzögerungskoeffizienten $\delta$ zeitlich verzögert werden, wobei für die Bildung des linken Audiosignals (43) ein m-tes Richtungssignal (8) mit

$$\delta_{L,m} = \frac{D}{2 \cdot v_{air}} \cdot \sin\left(\psi \cdot (\phi_m - \Phi) \cdot \frac{\pi}{180°}\right); \text{ mit } m = \{1,2,...,N_{BS}\}$$

und für die Bildung des rechten Audiosignals (44) das m-te Richtungssignal (8) mit

$$\delta_{R,m} = -\frac{D}{2 \cdot v_{air}} \cdot \sin\left(\psi \cdot (\phi_m - \Phi) \cdot \frac{\pi}{180°}\right); \text{ mit } m = \{1,2,..., N_{BS}\}$$

verzögert wird, wobei D einen angenommenen Abstand zwischen zwei Ohren eines Menschen, $v_{air}$ die Schallgeschwindigkeit in Luft, $\Psi$ einen Spreizfaktor, $\phi_m$ die dem m-ten Richtungssignal (8) zugeordnete Hauptempfangsrichtung (HR) und $\Phi$ die Haupthorchrichtung (63) bezeichnet.

11. Verfahren zum Generieren eines Stereoaudiosignals (14) aus mittels einer Sonaranlage empfangenen Wasserschallsignalen, wobei

a) die Sonaranlage eine Empfangsantenne (1) mit einer antennenfesten Bezugsrichtung (BR) und einer Vielzahl von Wasserschallaufnehmern (2), einen Richtungsbildner (6) und einen Stereomischer (7) aufweist,

b) die Vielzahl von Wasserschallaufnehmern (2) Empfangssignale (3, 5) aus Wasserschallsignalen gewinnt und dem Richtungsbildner (6) bereitstellt,

c) der Richtungsbildner (6) mittels richtungsabhängiger zeitlicher Verzögerung und konphaser Aufsummierung der Empfangssignale (3, 5) Richtungssignale (8) generiert und dem Stereomischer (7) bereitstellt,

d) jedem Richtungssignal (8) in Abhängigkeit der jeweiligen zeitlichen Verzögerungen eine Hauptempfangsrichtung (HR) zugeordnet ist, die in einer akustisch überwachten Überwachungsebene (UE) liegt und gegenüber der Bezugsrichtung (BR) geschwenkt ist, ggf. mit Ausnahme eines Richtungssignals (8), dessen zugeordnete Hauptempfangsrichtung (HR) mit der Bezugsrichtung (BR) übereinstimmt,

e) in der Überwachungsebene (UE) eine Haupthorchrichtung (63) sowie wenigstens ein Überwachungssektor (61) liegen, in dem eine oder eine Mehrzahl benachbarter Hauptempfangsrichtungen (HR) liegen und dem ein Abbildungssektor (62) in einer vom dem Stereoaudiosignal (14) aufgespannten Abbildungsebene (AE) zugeordnet ist,

f) der Stereomischer (7) ein linkes Audiosignal (43) und ein rechtes Audiosignal (44) des Stereoaudiosignals (14) zur Wiedergabe mittels einer akustischen Stereowiedergabeeinrichtung (13) generiert, wobei beide Audiosignale (43, 44) Summensignale gewichteter und verzögerter Richtungssignale (8) aufweisen,

g) der Stereomischer (7) das bzw. die der Haupthorchrichtung (63) zugeordneten Richtungssignale (8) gleich gewichtet sowie unverzögert oder gleich verzögert zur Bildung des linken und des rechten Audiosignals (43, 44) verarbeiten kann, während vom Stereomischer (7) Richtungssignale (8) mit links von der Haupthorchrichtung liegenden Hauptempfangsrichtungen (HR) zur Bildung des linken Audiosignals (43) weniger verzögert und höher gewichtet als zur Bildung des rechten Audiosignals (44) verarbeitet werden können, während vom Stereomischer (7) Richtungssignale (8) mit rechts von der Haupthorchrichtung (63) liegenden Hauptempfangsrichtungen (HR) zur Bildung des rechten Audiosignals (43) weniger verzögert und höher gewichtet als zur Bildung des linken Audiosignals (44) verarbeitet werden können, wobei

h) ein oder mehrere Überwachungssektoren (61) auswählbar und in eine der Anzahl der Überwachungssektoren (61) entsprechende Anzahl von Abbildungssektoren (62) akustisch abbildbar sind, wobei der Stereomischer (7) nur diejenigen Richtungssignale (8) zur Bildung des linken Audiosignals (43) und zur Bildung des rechten Audiosignals (44) verarbeitet, deren Hauptempfangsrichtungen (HR) in dem bzw. den ausgewählten Überwachungssektoren (61) liegen, **dadurch gekennzeichnet, dass**

i) Gewichtungsfaktoren β die Richtungssignale (8) für die Bildung des linken Audiosignals (43) und für die Bildung des rechten Audiosignals (44) gewichten, wobei für die Bildung des linken Audiosignals (43) ein m-tes Richtungssignal (8) mit

$$\beta_{L,m} = \begin{cases} 1 & \textit{für } ((\phi_m - \Phi)\cdot\Psi) \geq -90° \textit{ und } ((\phi_m - \Phi)\cdot\Psi) \leq 0° \\ \cos((\phi_m - \Phi)\cdot\Psi \cdot \frac{\pi}{180°}) & \textit{für } ((\phi_m - \Phi)\cdot\Psi) > 0° \textit{ und } ((\phi_m - \Phi)\cdot\Psi) \geq 90° \\ 0 & \textit{sonst} \end{cases}$$

und für die Bildung des rechten Audiosignals (44) das m-te Richtungssignal (8) mit

$$\beta_{R,m} = \begin{cases} 1 & \textit{für } ((\phi_m - \Phi)\cdot\Psi) \leq 90° \textit{ und } ((\phi_m - \Phi)\cdot\Psi) \geq 0° \\ \cos((\phi_m - \Phi)\cdot\Psi \cdot \frac{\pi}{180°}) & \textit{für } ((\phi_m - \Phi)\cdot\Psi) < 0° \textit{ und } ((\phi_m - \Phi)\cdot\Psi) \geq -90° \\ 0 & \textit{sonst} \end{cases}$$

gewichtet wird, wobei $\phi_m$ die dem m-ten Richtungssignal (8) zugeordnete Hauptempfangsrichtung, $\Phi$ die Haupthorchrichtung (63) und $\Psi$ einen Spreizfaktor bezeichnet und

j) Richtungssignals für die Bildung des linken Audiosignals (43) und für die Bildung des rechten Audiosignals (44) mittels Verzögerungskoeffizienten δ zeitlich verzögert werden, wobei für die Bildung des linken Audiosignals (43) ein m-tes Richtungssignal (8) mit

$$\delta_{L,m} = \frac{D}{2\cdot v_{air}} \cdot \sin\left(\psi \cdot (\phi_m - \Phi) \cdot \frac{\pi}{180°}\right); \text{ mit } m = \{1,2,...,N_{BS}\}$$

und für die Bildung des rechten Audiosignals (44) das m-te Richtungssignal (8) mit

$$\delta_{R,m} = -\frac{D}{2\cdot v_{air}} \cdot \sin\left(\psi \cdot (\phi_m - \Phi) \cdot \frac{\pi}{180°}\right); \text{ mit } m = \{1,2,..., N_{BS}\}$$

verzögert wird, wobei D einen angenommenen Abstand zwischen zwei Ohren eines Menschen, $v_{air}$ die Schallgeschwindigkeit in Luft, $\Psi$ den Spreizfaktor, $\phi_m$ die dem m-ten Richtungssignal (8) zugeordnete Hauptempfangsrichtung (HR) und $\Phi$ die Haupthorchrichtung (63) bezeichnet.

12. Verfahren nach einem der Ansprüche 9 bis 11,
    **dadurch gekennzeichnet, dass**
    die Haupthorchrichtung (63) gewählt, insbesondere gegenüber der antennenfesten Bezugsrichtung (BR) verschwenkt, werden kann.

13. Verfahren nach einem der Ansprüche 9 bis 12,
    **dadurch gekennzeichnet, dass**
    der Öffnungswinkel (65) des bzw. eines Abbildungssektors (62) gleich dem Öffnungswinkel (64) des bzw. eines zugeordneten Überwachungssektors (61) ist.

14. Verfahren nach einem der Ansprüche 9 bis 12,
    **dadurch gekennzeichnet, dass**
    der Öffnungswinkel (65) des bzw. eines Abbildungssektors (62) gleich dem Öffnungswinkel (64) oder größer oder kleiner als der Öffnungswinkel (64) des bzw. eines zugeordneten Überwachungssektors (61) gewählt wird, indem ein Spreizfaktor $\Psi$ gewählt wird, welcher das Verhältnis des Öffnungswinkels (65) dieses Abbildungssektors (62) zum Öffnungswinkel (64) des zugeordneten Überwachungssektors (61) angibt, wobei der Spreizfaktor $\Psi$ insbeson-

dere eine positive reelle Zahl ist.

**15.** Verfahren nach einem der Ansprüche 9 bis 14,
**dadurch gekennzeichnet, dass**
eine Zielverfolgungseinrichtung automatisch den oder die Überwachungssektoren (61) und/oder ein oder mehrere Richtungssignale (8) auswählt.

**Claims**

**1.** Apparatus for generating a stereo audio signal (14) from waterborne sound signals which can be received by means of a sonar installation, wherein

a) the sonar installation has a reception antenna (1) with a reference direction (BR) which is fixed for the antenna and a multiplicity of waterborne sound sensors (2), a beamformer (6) and a stereo mixer (7),
b) the multiplicity of waterborne sound sensors (2) can provide the beamformer (6) with received signals (3, 5) obtained from the waterborne sound signals,
c) the beamformer (6) can generate direction signals (8) by delaying the timing of the received signals (3, 5) on the basis of direction and summing them in phase, and can provide the stereo mixer (7) with said direction signals,
d) every direction signal (8) has an associated main reception direction (HR) on the basis of the respective time delays, said main reception direction being situated in an acoustically monitored monitoring plane (UE) and being pivoted relative to the reference direction (BR), possibly with the exception of a direction signal (8) whose associated main reception direction (HR) matches the reference direction (BR),
e) the monitoring plane (UE) contains a main listening direction (63) and at least one monitoring sector (61) which contains one or a plurality of adjacent main reception directions (HR) and which has an associated mapping sector (62) in a mapping plane (AE) which is covered by the stereo audio signal (14),
f) the stereo mixer (7) can be used to generate a left audio signal (43) and a right audio signal (44) for the stereo audio signal (14) for reproduction by means of an acoustic stereo reproduction device (13), and both audio signals (43, 44) have summed signals from weighted and delayed direction signals (8), and
g) the stereo mixer (7) can process the direction signal(s) (8) associated with the main listening direction (63) with equal weighting and undelayed or with equal delay to form the left and right audio signals (43, 44), whereas the stereo mixer (7) can process direction signals (8) with main reception directions (HR) to the left of the main listening direction (63) with less of a delay and with a higher weighting to form the left audio signal (43) than to form the right audio signal (44), whereas the stereo mixer (7) can process direction signals (8) with main reception directions (HR) to the right of the main listening direction (63) with less of a delay and with a higher weighting to form the right audio signal (43) than to form the left audio signal (44), and
h) one or more monitoring sectors (61) can be selected and can be acoustically mapped into a number of mapping sectors (62) which corresponds to the number of monitoring sectors (61), wherein the stereo mixer (7) is in a form such that it processes only those direction signals (8) for forming the left audio signal (43) and for forming the right audio signal (44) whose main reception directions (HR) are situated in the selected monitoring sector(s) (61),
**characterized in that**
i) the direction signals (8) for forming the left audio signal (43) and the right audio signal (44) are weighted using weighting factors β, wherein the left audio signal (43) is formed by weighting an m-th direction signal (8) with

$$\beta_{L,m} = \begin{cases} 1 & for\ ((\phi_m - \Phi) \cdot \Psi) \geq -90° \ and\ ((\phi_m - \Phi) \cdot \Psi) \leq 0° \\ \cos((\phi_m - \Phi) \cdot \Psi \cdot \frac{\pi}{180°}) & for\ ((\phi_m - \Phi) \cdot \Psi) > 0° \ and\ ((\phi_m - \Phi) \cdot \Psi) \geq 90° \\ 0 & otherwise \end{cases}$$

and the right audio signal (44) is formed by weighting the m-th direction signal (8) with

$$\beta_{R,m} = \begin{cases} 1 & \text{for } ((\phi_m - \Phi) \cdot \Psi) \leq 90^\circ \text{ and } ((\phi_m - \Phi) \cdot \Psi) \geq 0^\circ \\ \cos((\phi_m - \Phi) \cdot \Psi \cdot \frac{\pi}{180^\circ}) & \text{for } ((\phi_m - \Phi) \cdot \Psi) < 0^\circ \text{ and } ((\phi_m - \Phi) \cdot \Psi) \geq -90^\circ \\ 0 & \text{otherwise} \end{cases}$$

wherein $\Phi_m$ denotes the main reception direction associated with the m-th direction signal (8), $\Phi$ denotes the main listening direction (63), and $\Psi$ denotes a spread factor.

2. Apparatus for generating a stereo audio signal (14) from waterborne sound signals which can be received by means of a sonar installation, wherein

a) the sonar installation has a reception antenna (1) with a reference direction (BR) which is fixed for the antenna and a multiplicity of waterborne sound sensors (2), a beamformer (6) and a stereo mixer (7),
b) the multiplicity of waterborne sound sensors (2) can provide the beamformer (6) with received signals (3, 5) obtained from the waterborne sound signals,
c) the beamformer (6) can generate direction signals (8) by delaying the timing of the received signals (3, 5) on the basis of direction and summing them in phase, and can provide the stereo mixer (7) with said direction signals,
d) every direction signal (8) has an associated main reception direction (HR) on the basis of the respective time delays, said main reception direction being situated in an acoustically monitored monitoring plane (UE) and being pivoted relative to the reference direction (BR), possibly with the exception of a direction signal (8) whose associated main reception direction (HR) matches the reference direction (BR),
e) the monitoring plane (UE) contains a main listening direction (63) and at least one monitoring sector (61) which contains one or a plurality of adjacent main reception directions (HR) and which has an associated mapping sector (62) in a mapping plane (AE) which is covered by the stereo audio signal (14),
f) the stereo mixer (7) can be used to generate a left audio signal (43) and a right audio signal (44) for the stereo audio signal (14) for reproduction by means of an acoustic stereo reproduction device (13), and both audio signals (43, 44) have summed signals from weighted and delayed direction signals (8), and
g) the stereo mixer (7) can process the direction signal(s) (8) associated with the main listening direction (63) with equal weighting and undelayed or with equal delay to form the left and right audio signals (43, 44),
whereas the stereo mixer (7) can process direction signals (8) with main reception directions (HR) to the left of the main listening direction (63) with less of a delay and with a higher weighting to form the left audio signal (43) than to form the right audio signal (44),
whereas the stereo mixer (7) can process direction signals (8) with main reception directions (HR) to the right of the main listening direction (63) with less of a delay and with a higher weighting to form the right audio signal (43) than to form the left audio signal (44), and
h) one or more monitoring sectors (61) can be selected and can be acoustically mapped into a number of mapping sectors (62) which corresponds to the number of monitoring sectors (61), wherein the stereo mixer (7) is in a form such that it processes only those direction signals (8) for forming the left audio signal (43) and for forming the right audio signal (44) whose main reception directions (HR) are situated in the selected monitoring sector(s) (61),
**characterized in that**
i) the timing of the direction signals (8) for forming the left audio signal (43) and the right audio signal (44) is delayed using delay coefficients $\delta$, wherein the left audio signal (43) is formed by delaying an m-th direction signal (8) with

$$\delta_{L,m} = \frac{D}{2 \cdot v_{air}} \cdot \sin\left( \psi \cdot (\phi_m - \Phi) \cdot \frac{\pi}{180^\circ} \right); \text{with } m = \{1, 2, \dots, N_{BS}\}$$

and the right audio signal (44) is formed by delaying the m-th direction signal (8) with

$$\delta_{R,m} = -\frac{D}{2 \cdot v_{air}} \cdot \sin\left(\psi \cdot (\phi_m - \Phi) \cdot \frac{\pi}{180°}\right); \text{ with } m = \{1, 2, \dots, N_{BS}\}$$

wherein D denotes an assumed distance between two ears of a human being, $V_{air}$ denotes the speed of sound in air, $\Psi$ denotes a spread factor, $\Phi_m$ denotes the main reception direction (HR) associated with the m-th direction signal (8), and $\Phi$ denotes the main listening direction (63).

3. Apparatus for generating a stereo audio signal (14) from waterborne sound signals which can be received by means of a sonar installation, wherein

a) the sonar installation has a reception antenna (1) with a reference direction (BR) which is fixed for the antenna and a multiplicity of waterborne sound sensors (2), a beamformer (6) and a stereo mixer (7),

b) the multiplicity of waterborne sound sensors (2) can provide the beamformer (6) with received signals (3, 5) obtained from the waterborne sound signals,

c) the beamformer (6) can generate direction signals (8) by delaying the timing of the received signals (3, 5) on the basis of direction and summing them in phase, and can provide the stereo mixer (7) with said direction signals,

d) every direction signal (8) has an associated main reception direction (HR) on the basis of the respective time delays, said main reception direction being situated in an acoustically monitored monitoring plane (UE) and being pivoted relative to the reference direction (BR), possibly with the exception of a direction signal (8) whose associated main reception direction (HR) matches the reference direction (BR),

e) the monitoring plane (UE) contains a main listening direction (63) and at least one monitoring sector (61) which contains one or a plurality of adjacent main reception directions (HR) and which has an associated mapping sector (62) in a mapping plane (AE) which is covered by the stereo audio signal (14),

f) the stereo mixer (7) can be used to generate a left audio signal (43) and a right audio signal (44) for the stereo audio signal (14) for reproduction by means of an acoustic stereo reproduction device (13), and both audio signals (43, 44) have summed signals from weighted and delayed direction signals (8), and

g) the stereo mixer (7) can process the direction signal(s) (8) associated with the main listening direction (63) with equal weighting and undelayed or with equal delay to form the left and right audio signals (43, 44), whereas the stereo mixer (7) can process direction signals (8) with main reception directions (HR) to the left of the main listening direction (63) with less of a delay and with a higher weighting to form the left audio signal (43) than to form the right audio signal (44), whereas the stereo mixer (7) can process direction signals (8) with main reception directions (HR) to the right of the main listening direction (63) with less of a delay and with a higher weighting to form the right audio signal (43) than to form the left audio signal (44), and

h) one or more monitoring sectors (61) can be selected and can be acoustically mapped into a number of mapping sectors (62) which corresponds to the number of monitoring sectors (61), wherein the stereo mixer (7) is in a form such that it processes only those direction signals (8) for forming the left audio signal (43) and for forming the right audio signal (44) whose main reception directions (HR) are situated in the selected monitoring sector(s) (61),

**characterized in that**

i) the direction signals (8) for forming the left audio signal (43) and the right audio signal (44) are weighted using weighting factors β, wherein the left audio signal (43) is formed by weighting an m-th direction signal (8) with

$$\beta_{L,m} = \begin{cases} 1 & \textit{for } ((\phi_m - \Phi) \cdot \Psi) \geq -90° \textit{ and } ((\phi_m - \Phi) \cdot \Psi) \leq 0° \\ \cos((\phi_m - \Phi) \cdot \Psi \cdot \frac{\pi}{180°}) & \textit{for } ((\phi_m - \Phi) \cdot \Psi) > 0° \textit{ and } ((\phi_m - \Phi) \cdot \Psi) \geq 90° \\ 0 & \textit{otherwise} \end{cases}$$

and the right audio signal (44) is formed by weighting the m-th direction signal (8) with

$$\beta_{R,m} = \begin{cases} 1 & for\ ((\phi_m - \Phi) \cdot \Psi) \leq 90°\ and\ ((\phi_m - \Phi) \cdot \Psi) \geq 0° \\ \cos((\phi_m - \Phi) \cdot \Psi \cdot \dfrac{\pi}{180°}) & for\ ((\phi_m - \Phi) \cdot \Psi) < 0°\ and\ ((\phi_m - \Phi) \cdot \Psi) \geq -90° \\ 0 & otherwise \end{cases}$$

wherein $\Phi_m$ denotes the main reception direction associated with the m-th direction signal (8), $\Phi$ denotes the main listening direction (63), and $\Psi$ denotes a spread factor, and

j) the timing of the direction signals (8) for forming the left audio signal (43) and the right audio signal (44) is delayed using delay coefficients $\delta$, wherein the left audio signal (43) is formed by delaying an m-th direction signal (8) with

$$\delta_{L,m} = \frac{D}{2 \cdot v_{air}} \cdot \sin\left( \psi \cdot (\phi_m - \Phi) \cdot \frac{\pi}{180°} \right); \text{with } m = \{1,2,...,N_{BS}\}$$

and the right audio signal (44) is formed by delaying the m-th direction signal (8) with

$$\delta_{R,m} = -\frac{D}{2 \cdot v_{air}} \cdot \sin\left( \psi \cdot (\phi_m - \Phi) \cdot \frac{\pi}{180°} \right); \text{with } m = \{1,2,..., N_{BS}\}$$

wherein D denotes an assumed distance between two ears of a human being, $V_{air}$ denotes the speed of sound in air, $\Psi$ denotes the spread factor, $\Phi_m$ denotes the main reception direction (HR) associated with the m-th direction signal (8), and $\Phi$ denotes the main listening direction (63).

4. Apparatus according to one of the preceding claims,
**characterized in that**
the main listening direction (63) is associated with a

   a) central main reception direction situated in the centre of all the main reception directions (HR) or
   b) a central main reception direction situated in the centre of all the main reception directions (HR) associated with a monitoring sector (61).

5. Apparatus according to one of Claims 1 to 3, **characterized in that**
the main listening direction (63) is selectable, in particular pivotable relative to the reference direction (BR) which is fixed for the antenna.

6. Apparatus according to one of the preceding claims,
**characterized in that**
the included angle (65) of the or a mapping sector (62) is equal to the included angle (64) of the or an associated monitoring sector (61).

7. Apparatus according to one of Claims 1 to 5,
**characterized in that**
the included angle (65) of the or a mapping sector (62) can be selected, in particular can be altered, to be equal to the included angle (64) or greater than or less than the included angle (64) of the or an associated monitoring sector (61) by virtue of a spread factor $\Psi$ being able to be selected which indicates the ratio of the included angle (65) of this mapping sector (62) to the included angle (64) of the associated monitoring sector (61), wherein the spread factor $\Psi$ is particularly a positive real number.

**8.** Apparatus according to one of the preceding claims,
**characterized by**
a target tracking device for automatically selecting the monitoring sector(s) (61) and/or one or more direction signals (8).

**9.** Method for generating a stereo audio signal (14) from waterborne sound signals received by means of a sonar installation, wherein

a) the sonar installation has a reception antenna (1) with a reference direction (BR) which is fixed for the antenna and a multiplicity of waterborne sound sensors (2), a beamformer (6) and a stereo mixer (7),
b) the multiplicity of waterborne sound sensors (2) obtains received signals (3, 5) from waterborne sound signals and provides the beamformer (6) with them,
c) the beamformer (6) generates direction signals (8) by delaying the timing of the received signals (3, 5) on the basis of direction and summing them in phase, and provides the stereo mixer (7) with said direction signals,
d) every direction signal (8) has an associated main reception direction (HR) on the basis of the respective time delays, said main reception direction being situated in an acoustically monitored monitoring plane (UE) and being pivoted relative to the reference direction (BR), possibly with the exception of a direction signal (8) whose associated main reception direction (HR) matches the reference direction (BR),
e) the monitoring plane (UE) contains a main listening direction (63) and at least one monitoring sector (61) which contains one or a plurality of adjacent main reception directions (HR) and which has an associated mapping sector (62) in a mapping plane (AE) which is covered by the stereo audio signal (14),
f) the stereo mixer (7) generates a left audio signal (43) and a right audio signal (44) for the stereo audio signal (14) for reproduction by means of an acoustic stereo reproduction device (13), wherein both audio signals (43, 44) have summed signals from weighted and delayed direction signals (8),
g) the stereo mixer (7) can process the direction signal(s) (8) associated with the main listening direction (63) with equal weighting and undelayed or with equal delay to form the left and the right audio signal (43, 44), whereas the stereo mixer (7) can process direction signals (8) with main reception directions (HR) to the left of the main listening direction with less of a delay and with a higher weighting to form the left audio signal (43) than to form the right audio signal (44),
whereas the stereo mixer (7) can process direction signals (8) with main reception directions (HR) to the right of the main listening direction (63) with less of a delay and with a higher weighting to form the right audio signal (43) than to form the left audio signal (44), wherein
h) one or more monitoring sectors (61) are selectable and can be acoustically mapped into a number of mapping sectors (62) which corresponds to the number of monitoring sectors (61), wherein the stereo mixer (7) processes only those direction signals (8) for forming the left audio signal (43) and for forming the right audio signal (44) whose main reception directions (HR) are situated in the selected monitoring sector(s) (61),
**characterized in that**
i) weighting factors β weight the direction signals (8) for forming the left audio signal (43) and for forming the right audio signal (44), wherein the left audio signal (43) is formed by weighting an m-th direction signal (8) with

$$\beta_{L,m} = \begin{cases} 1 & for\ ((\phi_m - \Phi) \cdot \Psi) \geq -90° \, and\ ((\phi_m - \Phi) \cdot \Psi) \leq 0° \\ \cos((\phi_m - \Phi) \cdot \Psi \cdot \dfrac{\pi}{180°}) & for\ ((\phi_m - \Phi) \cdot \Psi) > 0° \ and\ \ ((\phi_m - \Phi) \cdot \Psi) \geq 90° \\ 0 & otherwise \end{cases}$$

and the right audio signal (44) is formed by weighting the m-th direction signal (8) with

$$\beta_{R,m} = \begin{cases} 1 & for\ ((\phi_m - \Phi) \cdot \Psi) \leq 90° \, and\ ((\phi_m - \Phi) \cdot \Psi) \geq 0° \\ \cos((\phi_m - \Phi) \cdot \Psi \cdot \dfrac{\pi}{180°}) & for\ ((\phi_m - \Phi) \cdot \Psi) < 0° \ and\ ((\phi_m - \Phi) \cdot \Psi) \geq -90° \\ 0 & otherwise \end{cases}$$

wherein $\Phi_m$ denotes the main reception direction associated with the m-th direction signal (8), $\Phi$ denotes the main listening direction (63), and $\Psi$ denotes a spread factor.

10. Method for generating a stereo audio signal (14) from waterborne sound signals received by means of a sonar installation, wherein

a) the sonar installation has a reception antenna (1) with a reference direction (BR) which is fixed for the antenna and a multiplicity of waterborne sound sensors (2), a beamformer (6) and a stereo mixer (7),

b) the multiplicity of waterborne sound sensors (2) obtains received signals (3, 5) from waterborne sound signals and provides the beamformer (6) with them,

c) the beamformer (6) generates direction signals (8) by delaying the timing of the received signals (3, 5) on the basis of direction and summing them in phase, and provides the stereo mixer (7) with said direction signals,

d) every direction signal (8) has an associated main reception direction (HR) on the basis of the respective time delays, said main reception direction being situated in an acoustically monitored monitoring plane (UE) and being pivoted relative to the reference direction (BR), possibly with the exception of a direction signal (8) whose associated main reception direction (HR) matches the reference direction (BR),

e) the monitoring plane (UE) contains a main listening direction (63) and at least one monitoring sector (61) which contains one or a plurality of adjacent main reception directions (HR) and which has an associated mapping sector (62) in a mapping plane (AE) which is covered by the stereo audio signal (14),

f) the stereo mixer (7) generates a left audio signal (43) and a right audio signal (44) for the stereo audio signal (14) for reproduction by means of an acoustic stereo reproduction device (13), wherein both audio signals (43, 44) have summed signals from weighted and delayed direction signals (8),

g) the stereo mixer (7) can process the direction signal(s) (8) associated with the main listening direction (63) with equal weighting and undelayed or with equal delay to form the left and the right audio signal (43, 44),

whereas the stereo mixer (7) can process direction signals (8) with main reception directions (HR) to the left of the main listening direction with less of a delay and with a higher weighting to form the left audio signal (43) than to form the right audio signal (44),

whereas the stereo mixer (7) can process direction signals (8) with main reception directions (HR) to the right of the main listening direction (63) with less of a delay and with a higher weighting to form the right audio signal (43) than to form the left audio signal (44), wherein

h) one or more monitoring sectors (61) are selectable and can be acoustically mapped into a number of mapping sectors (62) which corresponds to the number of monitoring sectors (61), wherein the stereo mixer (7) processes only those direction signals (8) for forming the left audio signal (43) and for forming the right audio signal (44) whose main reception directions (HR) are situated in the selected monitoring sector(s) (61),

**characterized in that**

i) direction signals for forming the left audio signal (43) and for forming the right audio signal (44) have their timing delayed by means of delay coefficients δ, wherein the left audio signal (43) is formed by delaying an m-th direction signal (8) with

$$\delta_{L,m} = \frac{D}{2 \cdot v_{air}} \cdot \sin\left(\psi \cdot (\phi_m - \Phi) \cdot \frac{\pi}{180°}\right); \text{ with } m = \{1, 2, ..., N_{BS}\}$$

and the right audio signal (44) is formed by delaying the m-th direction signal (8) with

$$\delta_{R,m} = -\frac{D}{2 \cdot v_{air}} \cdot \sin\left(\psi \cdot (\phi_m - \Phi) \cdot \frac{\pi}{180°}\right); \text{ with } m = \{1, 2, ..., N_{BS}\}$$

wherein D denotes an assumed distance between two ears of a human being, $V_{air}$ denotes the speed of sound in air, $\Psi$ denotes a spread factor, $\Phi_m$ denotes the main reception direction (HR) associated with the m-th direction signal (8), and $\Phi$ denotes the main listening direction (63).

11. Method for generating a stereo audio signal (14) from waterborne sound signals received by means of a sonar installation, wherein

a) the sonar installation has a reception antenna (1) with a reference direction (BR) which is fixed for the antenna and a multiplicity of waterborne sound sensors (2), a beamformer (6) and a stereo mixer (7),

b) the multiplicity of waterborne sound sensors (2) obtains received signals (3, 5) from waterborne sound signals and provides the beamformer (6) with them,

c) the beamformer (6) generates direction signals (8) by delaying the timing of the received signals (3, 5) on the basis of direction and summing them in phase, and provides the stereo mixer (7) with said direction signals,

d) every direction signal (8) has an associated main reception direction (HR) on the basis of the respective time delays, said main reception direction being situated in an acoustically monitored monitoring plane (UE) and being pivoted relative to the reference direction (BR), possibly with the exception of a direction signal (8) whose associated main reception direction (HR) matches the reference direction (BR),

e) the monitoring plane (UE) contains a main listening direction (63) and at least one monitoring sector (61) which contains one or a plurality of adjacent main reception directions (HR) and which has an associated mapping sector (62) in a mapping plane (AE) which is covered by the stereo audio signal (14),

f) the stereo mixer (7) generates a left audio signal (43) and a right audio signal (44) for the stereo audio signal (14) for reproduction by means of an acoustic stereo reproduction device (13), wherein both audio signals (43, 44) have summed signals from weighted and delayed direction signals (8),

g) the stereo mixer (7) can process the direction signal(s) (8) associated with the main listening direction (63) with equal weighting and undelayed or with equal delay to form the left and the right audio signal (43, 44), whereas the stereo mixer (7) can process direction signals (8) with main reception directions (HR) to the left of the main listening direction with less of a delay and with a higher weighting to form the left audio signal (43) than to form the right audio signal (44), whereas the stereo mixer (7) can process direction signals (8) with main reception directions (HR) to the right of the main listening direction (63) with less of a delay and with a higher weighting to form the right audio signal (43) than to form the left audio signal (44), wherein

h) one or more monitoring sectors (61) are selectable and can be acoustically mapped into a number of mapping sectors (62) which corresponds to the number of monitoring sectors (61), wherein the stereo mixer (7) processes only those direction signals (8) for forming the left audio signal (43) and for forming the right audio signal (44) whose main reception directions (HR) are situated in the selected monitoring sector(s) (61),

**characterized in that**

i) weighting factors β weight the direction signals (8) for forming the left audio signal (43) and for forming the right audio signal (44), wherein the left audio signal (43) is formed by weighting an m-th direction signal (8) with

$$\beta_{L,m} = \begin{cases} 1 & for\ ((\phi_m - \Phi) \cdot \Psi) \geq -90°\ and\ ((\phi_m - \Phi) \cdot \Psi) \leq 0° \\ \cos((\phi_m - \Phi) \cdot \Psi \cdot \dfrac{\pi}{180°}) & for\ ((\phi_m - \Phi) \cdot \Psi) > 0°\ and\ \ ((\phi_m - \Phi) \cdot \Psi) \geq 90° \\ 0 & otherwise \end{cases}$$

and the right audio signal (44) is formed by weighting the m-th direction signal (8) with

$$\beta_{R,m} = \begin{cases} 1 & for\ ((\phi_m - \Phi) \cdot \Psi) \leq 90°\ and\ \ ((\phi_m - \Phi) \cdot \Psi) \geq 0° \\ \cos((\phi_m - \Phi) \cdot \Psi \cdot \dfrac{\pi}{180°}) & for\ ((\phi_m - \Phi) \cdot \Psi) < 0°\ and\ ((\phi_m - \Phi) \cdot \Psi) \geq -90° \\ 0 & otherwise \end{cases}$$

wherein $\Phi_m$ denotes the main reception direction associated with the m-th direction signal (8), $\Phi$ denotes the main listening direction (63), and $\Psi$ denotes a spread factor, and

j) direction signals for forming the left audio signal (43) and for forming the right audio signal (44) have their timing delayed by means of delay coefficients δ, wherein the left audio signal (43) is formed by delaying an m-th direction signal (8) with

$$\delta_{L,m} = \frac{D}{2 \cdot v_{air}} \cdot \sin\left(\psi \cdot (\phi_m - \Phi) \cdot \frac{\pi}{180°}\right); \text{ with } m = \{1,2,...,N_{BS}\}$$

and the right audio signal (44) is formed by delaying the m-th direction signal (8) with

$$\delta_{R,m} = -\frac{D}{2 \cdot v_{air}} \cdot \sin\left(\psi \cdot (\phi_m - \Phi) \cdot \frac{\pi}{180°}\right); \text{ with } m = \{1,2,..., N_{BS}\}$$

wherein D denotes an assumed distance between two ears of a human being, $V_{air}$ denotes the speed of sound in air, $\Psi$ denotes the spread factor, $\Phi_m$ denotes the main reception direction (HR) associated with the m-th direction signal (8), and $\Phi$ denotes the main listening direction (63).

**12.** Method according to one of Claims 9 to 11,
**characterized in that**
the main listening direction (63) can be selected, in particular can be pivoted relative to the reference direction (BR) which is fixed for the antenna.

**13.** Method according to one of Claims 9 to 12,
**characterized in that**
the included angle (65) of the or a mapping sector (62) is equal to the included angle (64) of the or an associated monitoring sector (61).

**14.** Method according to one of Claims 9 to 12,
**characterized in that**
the included angle (65) of the or a mapping sector (62) is selected to be equal to the included angle (64) or greater than or less than the included angle (64) of the or an associated monitoring sector (61) by virtue of a spread factor $\Psi$ being selected which indicates the ratio of the included angle (65) of this mapping sector (62) to the included angle (64) of the associated monitoring sector (61), wherein the spread factor $\Psi$ is particularly a positive real number.

**15.** Method according to one of Claims 9 to 14,
**characterized in that**
a target tracking device automatically selects the monitoring sector(s) (61) and/or one or more direction signals (8).

**Revendications**

**1.** Dispositif destiné à générer un signal audio stéréo (14) à partir de signaux acoustiques sous-marins pouvant être reçus par un système de sonar, dans lequel :

a) le système de sonar comprend une antenne de réception (1) ayant une direction de référence (BR) fixée à l'antenne et une pluralité de récepteurs acoustiques sous-marins (2), un générateur de direction (6) et un mélangeur stéréo (7),
b) des signaux de réception (3, 5) obtenus à partir des signaux acoustiques sous-marins par la pluralité de récepteurs acoustiques sous-marins (2) peuvent être fournis au générateur de direction (6),
c) des signaux de direction (8) peuvent être générés par le générateur de direction (6) en étant soumis à un retard temporel dépendant de la direction et à une combinaison en phase des signaux de réception (3, 5) et peuvent être fournis au mélangeur stéréo (7),
d) à chaque signal de direction (8) est associée une direction de réception principale (HR) en fonction des retards temporels respectifs, ladite direction de réception principale se situant dans un plan de surveillance surveillé acoustiquement (UE) et étant amenée à pivoter par rapport à la direction de référence (BR), le cas échéant à l'exclusion d'un signal de direction (8) dont la direction de réception principale (HR) associée concorde avec la direction de référence (BR),

e) une direction d'écoute principale (63) et au moins un secteur de surveillance (61) se situent dans le plan de surveillance (UE), secteur de surveillance dans lequel se situent une ou plusieurs directions de réception principales adjacentes (HR) et auquel est associé un secteur de formation d'image (62) se situant dans un plan image (AE) couvert par le signal audio stéréo (14),

f) un signal audio gauche (43) et un signal audio droit (44) du signal audio stéréo (14) peuvent être générés au moyen du mélangeur stéréo (7) pour une reproduction au moyen d'une unité de reproduction stéréo acoustique (13), les deux signaux audio (43, 44) comprenant des signaux cumulés de signaux de direction (8) pondérés et retardés dans le temps, et

g) le signal ou les signaux de direction (8) associé(s) à la direction d'écoute principale (63) peuvent être traités par le mélangeur stéréo (7) en étant pondérés de façon égale et en n'étant pas retardés ou en étant retardés de façon égale pour la formation des signaux audio gauche et droit (43, 44), alors que les signaux de direction (8) dont les directions d'écoute principales (HR) se situent à gauche de la direction d'écoute principale (63) peuvent être traités par le mélangeur stéréo (7) pour la formation du signal audio gauche (43) en étant moins retardés et en étant plus fortement pondérées que pour la formation du signal audio droit (44), alors que les signaux de direction (8) dont la direction de réception principale (HR) se situe à droite de la direction d'écoute principale (63) peuvent être traités par le mélangeur stéréo (7) pour former le signal audio droit (43) en étant moins retardés et plus fortement pondérés que pour la formation du signal audio gauche (44), et

h) un ou plusieurs secteurs de surveillance (61) peuvent être sélectionnés et leurs images peuvent être formées acoustiquement dans un nombre de secteurs de formation d'images (62) correspondant au nombre de secteurs de surveillance (61), le mélangeur stéréo (7) étant conçu de telle façon qu'il ne traite que les signaux de direction (8) servant à former le signal audio gauche (43) et servant à former le signal audio droit (44) dont les directions de réception principales (HR) se situent dans le ou les secteur(s) de surveillance sélectionné(s) (61),

**caractérisé en ce que**

i) la pondération des signaux de direction (8) pour la formation du signal audio gauche (43) et du signal audio droit (44) est effectuée au moyen de facteurs de pondération β, dans lequel, pour la formation du signal audio gauche (43), un m-ème signal de direction (8) est pondéré par :

$$\beta_{L,m} = \begin{cases} 1 & pour\ ((\phi_m - \Phi) \cdot \Psi) \geq -90° \ et \quad ((\phi_m - \Phi) \cdot \Psi) \leq 0° \\ \cos((\phi_m - \Phi) \cdot \Psi \cdot \dfrac{\pi}{180°}) & pour\ ((\phi_m - \Phi) \cdot \Psi) > 0° \ et \quad ((\phi_m - \Phi) \cdot \Psi) \geq 90° \\ 0 & sinon \end{cases}$$

et pour la formation du signal audio droit (44), le m-ème signal de direction (8) est pondéré par :

$$\beta_{R,m} = \begin{cases} 1 & pour\ ((\phi_m - \Phi) \cdot \Psi) \leq 90° \ et \quad ((\phi_m - \Phi) \cdot \Psi) \geq 0° \\ \cos((\phi_m - \Phi) \cdot \Psi \cdot \dfrac{\pi}{180°}) & pour\ ((\phi_m - \Phi) \cdot \Psi) < 0° \ et \quad ((\phi_m - \Phi) \cdot \Psi) \geq -90° \\ 0 & sinon \end{cases}$$

où $\Phi_m$ représente la direction de réception principale associée au m-ème signal de direction (8), $\Phi$, la direction d'écoute principale (63) et $\Psi$, un facteur d'étalement.

2. Dispositif destiné à générer un signal audio stéréo (14) à partir de signaux acoustiques sous-marins pouvant être reçus par un système de sonar, dans lequel :

a) le système de sonar comprend une antenne de réception (1) ayant une direction de référence (BR) fixée à l'antenne et une pluralité de récepteurs acoustiques sous-marins (2), un générateur de direction (6) et un mélangeur stéréo (7),

b) des signaux de réception (3, 5) obtenus à partir des signaux acoustiques sous-marins par la pluralité de récepteurs acoustiques sous-marins (2) peuvent être fournis au générateur de direction (6),

c) des signaux de direction (8) peuvent être générés par le générateur de direction (6) en étant soumis à un retard temporel dépendant de la direction et à une combinaison en phase des signaux de réception (3, 5) et peuvent être fournis au mélangeur stéréo (7),

d) à chaque signal de direction (8) est associée une direction de réception principale (HR) en fonction des retards temporels respectifs, ladite direction de réception principale se situant dans un plan de surveillance surveillé acoustiquement (UE) et étant amenée à pivoter par rapport à la direction de référence (BR), le cas échéant à l'exclusion d'un signal de direction (8) dont la direction de réception principale (HR) associée concorde avec la direction de référence (BR),

e) une direction d'écoute principale (63) et au moins un secteur de surveillance (61) se situent dans le plan de surveillance (UE), secteur de surveillance dans lequel se situent une ou plusieurs directions de réception principales adjacentes (HR) et auquel est associé un secteur de formation d'image (62) se situant dans un plan image (AE) couvert par le signal audio stéréo (14),

f) un signal audio gauche (43) et un signal audio droit (44) du signal audio stéréo (14) peuvent être générés au moyen du mélangeur stéréo (7) pour une reproduction au moyen d'une unité de reproduction stéréo acoustique (13), les deux signaux audio (43, 44) comprenant des signaux cumulés de signaux de direction (8) pondérés et retardés dans le temps, et

g) le signal ou les signaux de direction (8) associé(s) à la direction d'écoute principale (63) peuvent être traités par le mélangeur stéréo (7) en étant pondérés de façon égale et en n'étant pas retardés ou en étant retardés de façon égale pour la formation des signaux audio gauche et droit (43, 44), alors que les signaux de direction (8) dont les directions d'écoute principales (HR) se situent à gauche de la direction d'écoute principale (63) peuvent être traités par le mélangeur stéréo (7) pour la formation du signal audio gauche (43) en étant moins retardés et en étant plus fortement pondérées que pour la formation du signal audio droit (44),

alors que les signaux de direction (8) dont la direction de réception principale (HR) se situe à droite de la direction d'écoute principale (63) peuvent être traités par le mélangeur stéréo (7) pour former le signal audio droit (43) en étant moins retardés et plus fortement pondérés que pour la formation du signal audio gauche (44), et

h) un ou plusieurs secteurs de surveillance (61) peuvent être sélectionnés et leurs images peuvent être formées acoustiquement dans un nombre de secteurs de formation d'images (62) correspondant au nombre de secteurs de surveillance (61), le mélangeur stéréo (7) étant conçu de telle façon qu'il ne traite que les signaux de direction (8) servant à former le signal audio gauche (43) et servant à former le signal audio droit (44) dont les directions de réception principales (HR) se situent dans le ou les secteur(s) de surveillance sélectionné(s) (61),

**caractérisé en ce que**

i) les signaux de direction (8) sont retardés temporellement, pour la formation du signal audio gauche (43) et du signal audio droit (44), au moyen de coefficients de retard δ, dans lequel, pour la formation du signal audio gauche (43), un m-ème signal de direction (8) est retardé de :

$$\delta_{L,m} = \frac{D}{2 \cdot v_{air}} \cdot \sin\left( \psi \cdot (\phi_m - \Phi) \cdot \frac{\pi}{180°} \right); \; avec \;\; m = \{1, 2, ..., N_{BS}\}$$

et pour la formation du signal audio droit (44), le m-ème signal de direction (8) est retardé de :

$$\delta_{R,m} = -\frac{D}{2 \cdot v_{air}} \cdot \sin\left( \psi \cdot (\phi_m - \Phi) \cdot \frac{\pi}{180°} \right); \; avec \;\; m = \{1, 2, ..., N_{BS}\}$$

où D représente une distance acceptée entre les deux oreilles d'un être humain, $V_{air}$, la vitesse du son dans l'air, Ψ, un facteur d'étalement, $\Phi_m$, la direction de réception principale (HR) associée au m-ème signal de direction (8) et Φ, la direction d'écoute principale (63).

3. Dispositif destiné à générer un signal audio stéréo (14) à partir de signaux acoustiques sous-marins pouvant être reçus par un système de sonar, dans lequel :

EP 2 212 709 B1

a) le système de sonar comprend une antenne de réception (1) ayant une direction de référence (BR) fixée à l'antenne et une pluralité de récepteurs acoustiques sous-marins (2), un générateur de direction (6) et un mélangeur stéréo (7),

b) des signaux de réception (3, 5) obtenus à partir des signaux acoustiques sous-marins par la pluralité de récepteurs acoustiques sous-marins (2) peuvent être fournis au générateur de direction (6),

c) des signaux de direction (8) peuvent être générés par le générateur de direction (6) en étant soumis à un retard temporel dépendant de la direction et à une combinaison en phase des signaux de réception (3, 5) et peuvent être fournis au mélangeur stéréo (7),

d) à chaque signal de direction (8) est associée une direction de réception principale (HR) en fonction des retards temporels respectifs, ladite direction de réception principale se situant dans un plan de surveillance surveillé acoustiquement (UE) et étant amenée à pivoter par rapport à la direction de référence (BR), le cas échéant à l'exclusion d'un signal de direction (8) dont la direction de réception principale (HR) associée concorde avec la direction de référence (BR),

e) une direction d'écoute principale (63) et au moins un secteur de surveillance (61) se situent dans le plan de surveillance (UE), secteur de surveillance dans lequel se situent une ou plusieurs directions de réception principales adjacentes (HR) et auquel est associé un secteur de formation d'image (62) se situant dans un plan image (AE) couvert par le signal audio stéréo (14),

f) un signal audio gauche (43) et un signal audio droit (44) du signal audio stéréo (14) peuvent être générés au moyen du mélangeur stéréo (7) pour une reproduction au moyen d'une unité de reproduction stéréo acoustique (13) et les deux signaux audio (43, 44) comprenant des signaux cumulés de signaux de direction (8) pondérés et retardés dans le temps, et

g) le signal ou les signaux de direction (8) associé(s) à la direction d'écoute principale (63) peuvent être traités par le mélangeur stéréo (7) en étant pondérés de façon égale et en n'étant pas retardés ou en étant retardés de façon égale pour la formation des signaux audio gauche et droit (43, 44), alors que les signaux de direction (8) dont les directions d'écoute principales (HR) se situent à gauche de la direction d'écoute principale (63) peuvent être traités par le mélangeur stéréo (7) pour la formation du signal audio gauche (43) en étant moins retardés et en étant plus fortement pondérées que pour la formation du signal audio droit (44),

alors que les signaux de direction (8) dont la direction de réception principale (HR) se situe à droite de la direction d'écoute principale (63) peuvent être traités par le mélangeur stéréo (7) pour former le signal audio droit (43) en étant moins retardés et plus fortement pondérés que pour la formation du signal audio gauche (44), et

h) un ou plusieurs secteurs de surveillance (61) peuvent être sélectionnés et leurs images peuvent être formées acoustiquement dans un nombre de secteurs de formation d'images (62) correspondant au nombre de secteurs de surveillance (61), le mélangeur stéréo (7) étant conçu de telle façon qu'il ne traite que les signaux de direction (8) servant à former le signal audio gauche (43) et servant à former le signal audio droit (44) dont les directions de réception principales (HR) se situent dans le ou les secteur(s) de surveillance sélectionné(s) (61), **caractérisé en ce que**

i) la pondération des signaux de direction (8) pour la formation du signal audio gauche (43) et du signal audio droit (44) est effectuée au moyen de facteurs de pondération β, dans lequel, pour la formation du signal audio gauche (43), un m-ème signal de direction (8) est pondéré par :

$$\beta_{L,m} = \begin{cases} 1 & pour\ ((\phi_m - \Phi)\cdot\Psi) \geq -90° \ et \quad ((\phi_m - \Phi)\cdot\Psi) \leq 0° \\ \cos((\phi_m - \Phi)\cdot\Psi\cdot\frac{\pi}{180°}) & pour\ ((\phi_m - \Phi)\cdot\Psi) > 0° \ et \quad ((\phi_m - \Phi)\cdot\Psi) \geq 90° \\ 0 & sinon \end{cases}$$

et pour la formation du signal audio droit (44), le m-ème signal de direction (8) est pondéré par :

29

$$\beta_{R,m} = \begin{cases} 1 & pour\ ((\phi_m - \Phi)\cdot\Psi)\leq 90°\ et \quad ((\phi_m - \Phi)\cdot\Psi)\geq 0° \\ \cos((\phi_m - \Phi)\cdot\Psi\cdot\dfrac{\pi}{180°}) & pour\ ((\phi_m - \Phi)\cdot\Psi)< 0°\ et \quad ((\phi_m - \Phi)\cdot\Psi)\geq -90° \\ 0 & sinon \end{cases}$$

où $\Phi_m$ représente la direction de réception principale associée au m-ème signal de direction (8), $\Phi$, la direction d'écoute principale (63) et $\Psi$, un facteur d'étalement, et

j) les signaux de direction (8) sont retardés temporellement, pour la formation du signal audio gauche (43) et du signal audio droit (44), au moyen de coefficients de retard $\delta$, dans lequel, pour la formation du signal audio gauche (43), un m-ème signal de direction (8) est retardé de :

$$\delta_{L,m} = \frac{D}{2\cdot v_{air}}\cdot\sin\left(\psi\cdot(\phi_m - \Phi)\cdot\frac{\pi}{180°}\right);\ avec\ \ m = \{1,2,...,N_{BS}\}$$

et pour la formation du signal audio droit (44), le m-ème signal de direction (8) est retardé de :

$$\delta_{R,m} = -\frac{D}{2\cdot v_{air}}\cdot\sin\left(\psi\cdot(\phi_m - \Phi)\cdot\frac{\pi}{180°}\right);\ avec\ \ m = \{1,2,...,N_{BS}\}$$

où D représente une distance acceptée entre les deux oreilles d'un être humain, $V_{air}$, la vitesse du son dans l'air, $\Psi$, un facteur d'étalement, $\Phi_m$, la direction de réception principale (HR) associée au m-ème signal de direction (8) et $\Phi$, la direction d'écoute principale (63).

4. Dispositif selon l'une quelconque des revendications précédentes,
**caractérisé en ce que**
la direction d'écoute principale (63) est associée à

a) une direction de réception principale moyenne se situant au milieu de la totalité des directions de réception principales (HR), ou
b) une direction de réception principale moyenne se situant au milieu de la totalité des directions de réception principales (HR) associées à un secteur de surveillance (61).

5. Dispositif selon l'une quelconque des revendications 1 à 3,
**caractérisé en ce que**
la direction d'écoute principale (63) est sélectionnable notamment en étant amenée à pivoter par rapport à la direction de référence (BR) fixée à l'antenne.

6. Dispositif selon l'une quelconque des revendications précédentes,
**caractérisé en ce que**
l'angle d'ouverture (65) du ou d'un secteur de formation d'image (62) est identique à l'angle d'ouverture (64) du ou d'un secteur de surveillance associé (61).

7. Dispositif selon l'une quelconque des revendications 1 à 5,
**caractérisé en ce que**
l'angle d'ouverture (65) du ou d'un secteur de formation d'image (62) peut être sélectionné de façon à être identique à l'angle d'ouverture (64) ou à être supérieur ou inférieur à l'angle d'ouverture (64) du ou d'un secteur de surveillance associé (61) et peut en particulier être modifié, par le fait qu'il est possible de sélectionner un facteur d'étalement Ψ qui fournit le rapport de l'angle d'ouverture (65) de ce secteur de formation d'image (62) à l'angle d'ouverture (64) du secteur de surveillance (61) associé, le facteur d'étalement Ψ étant plus particulièrement un nombre entier positif.

8. Dispositif selon l'une quelconque des revendications précédentes, **caractérisé par** un dispositif de poursuite destiné à automatiser la sélection du ou des secteur(s) de surveillance (61) et/ou d'un signal ou de plusieurs signaux de direction (8).

9. Procédé destiné à générer un signal audio stéréo (14) à partir de signaux acoustiques sous-marins pouvant être reçus par un système de sonar, dans lequel :

a) le système de sonar comprend une antenne de réception (1) ayant une direction de référence (BR) fixée à l'antenne et une pluralité de récepteurs acoustiques sous-marins (2), un générateur de direction (6) et un mélangeur stéréo (7),
b) la pluralité de récepteurs acoustiques sous-marins (2) obtient des signaux de réception (3, 5) à partir des signaux acoustiques sous-marins et les fournit au générateur de direction (6),
c) le générateur de direction (6) génère des signaux de direction (8) en retardant temporellement d'une façon qui dépend de la direction et en combinant en phase les signaux de réception (3, 5) et les fournit au mélangeur stéréo (7),
d) à chaque signal de direction (8) est associée une direction de réception principale (HR) en fonction du retard temporel respectif, ladite direction de réception principale se situant dans un plan de surveillance surveillé acoustiquement (UE) et étant amenée à pivoter par rapport à la direction de référence (BR), le cas échéant à l'exclusion d'un signal de direction (8) dont la direction de réception principale (HR) associée concorde avec la direction de référence (BR),
e) une direction d'écoute principale (63) et au moins un secteur de surveillance (61) se situent dans le plan de surveillance (UE), secteur de surveillance dans lequel se situent une ou plusieurs directions de réception principales adjacentes (HR) et auquel est associé un secteur de formation d'image (62) se situant dans un plan image (AE) couvert par le signal audio stéréo (14),
f) le mélangeur stéréo (7) génère un signal audio gauche (43) et un signal audio droit (44) du signal audio stéréo (14) pour une reproduction au moyen d'une unité de reproduction stéréo acoustique (13), les deux signaux audio (43, 44) comprenant des signaux cumulés de signaux de direction (8) pondérés et retardés dans le temps, et
g) le mélangeur stéréo (7) peut traiter le ou les signaux de direction (8) associés à la direction d'écoute principale (63) en les pondérant de façon égale ainsi qu'en ne les retardant pas ou en les retardant de façon égale pour la formation des signaux audio gauche et droit (43, 44), alors que les signaux de direction (8) dont les directions de réception principales (HR) se situent à gauche de la direction d'écoute principale peuvent être traités par le mélangeur stéréo (7) pour la formation du signal audio gauche (43) en étant moins retardés et en étant plus fortement pondérées que pour la formation du signal audio droit (44), alors que les signaux de direction (8) dont la direction de réception principale (HR) se situe à droite de la direction d'écoute principale (63) peuvent être traités par le mélangeur stéréo (7) pour former le signal audio droit (43) en étant moins retardés et plus fortement pondérés que pour la formation du signal audio gauche (44), dans lequel
h) un ou plusieurs secteurs de surveillance (61) peuvent être sélectionnés et leurs images peuvent être formées acoustiquement dans un nombre de secteurs de formation d'images (62) correspondant au nombre de secteurs de surveillance (61), le mélangeur stéréo (7) ne traitant que les signaux de direction (8) servant à former le signal audio gauche (43) et servant à former le signal audio droit (44) dont les directions de réception principales (HR) se situent dans le ou les secteur(s) de surveillance sélectionné(s) (61), **caractérisé en ce que**
i) des facteurs de pondération β pondèrent les signaux de direction (8) pour la formation du signal audio gauche (43) et pour la formation du signal audio droit (44), dans lequel, pour la formation du signal audio gauche (43), un m-ème signal de direction (8) est pondéré par :

$$\beta_{L,m} = \begin{cases} 1 & pour\ ((\phi_m - \Phi)\cdot\Psi) \geq -90°\ et\ ((\phi_m - \Phi)\cdot\Psi) \leq 0° \\ \cos((\phi_m - \Phi)\cdot\Psi\cdot\frac{\pi}{180°}) & pour\ ((\phi_m - \Phi)\cdot\Psi) > 0°\ et\ ((\phi_m - \Phi)\cdot\Psi) \geq 90° \\ 0 & sinon \end{cases}$$

et pour la formation du signal audio droit (44), le m-ème signal de direction (8) est pondéré par

$$\beta_{R,m} = \begin{cases} 1 & pour\ ((\phi_m - \Phi) \cdot \Psi) \le 90° \ et \quad ((\phi_m - \Phi) \cdot \Psi) \ge 0° \\ \cos((\phi_m - \Phi) \cdot \Psi \cdot \dfrac{\pi}{180°}) & pour\ ((\phi_m - \Phi) \cdot \Psi) < 0° \ et \quad ((\phi_m - \Phi) \cdot \Psi) \ge -90° \\ 0 & sinon \end{cases}$$

où $\phi_m$ représente la direction de réception principale associée au m-ème signal de direction (8), $\Phi$, la direction d'écoute principale (63) et $\Psi$, un facteur d'étalement.

**10.** Procédé destiné à générer un signal audio stéréo (14) à partir de signaux acoustiques sous-marins pouvant être reçus par un système de sonar, dans lequel :

a) le système de sonar comprend une antenne de réception (1) ayant une direction de référence (BR) fixée à l'antenne et une pluralité de récepteurs acoustiques sous-marins (2), un générateur de direction (6) et un mélangeur stéréo (7),

b) la pluralité de récepteurs acoustiques sous-marins (2) obtient des signaux de réception (3, 5) à partir des signaux acoustiques sous-marins et les fournit au générateur de direction (6),

c) le générateur de direction (6) génère des signaux de direction (8) en retardant temporellement d'une façon qui dépend de la direction et en combinant en phase les signaux de réception (3, 5) et les fournit au mélangeur stéréo (7),

d) à chaque signal de direction (8) est associée une direction de réception principale (HR) en fonction du retard temporel respectif, ladite direction de réception principale se situant dans un plan de surveillance surveillé acoustiquement (UE) et étant amenée à pivoter par rapport à la direction de référence (BR), le cas échéant à l'exclusion d'un signal de direction (8) dont la direction de réception principale (HR) associée concorde avec la direction de référence (BR),

e) une direction d'écoute principale (63) et au moins un secteur de surveillance (61) se situent dans le plan de surveillance (UE), secteur de surveillance dans lequel se situent une ou plusieurs directions de réception principales adjacentes (HR) et auquel est associé un secteur de formation d'image (62) se situant dans un plan image (AE) couvert par le signal audio stéréo (14),

f) le mélangeur stéréo (7) génère un signal audio gauche (43) et un signal audio droit (44) du signal audio stéréo (14) pour une reproduction au moyen d'une unité de reproduction stéréo acoustique (13), les deux signaux audio (43, 44) comprenant des signaux cumulés de signaux de direction (8) pondérés et retardés dans le temps, et

g) le mélangeur stéréo (7) peut traiter le ou les signaux de direction (8) associés à la direction d'écoute principale (63) en les pondérant de façon égale ainsi qu'en ne les retardant pas ou en les retardant de façon égale pour la formation des signaux audio gauche et droit (43, 44), alors que les signaux de direction (8) dont les directions de réception principales (HR) se situent à gauche de la direction d'écoute principale peuvent être traités par le mélangeur stéréo (7) pour la formation du signal audio gauche (43) en étant moins retardés et en étant plus fortement pondérées que pour la formation du signal audio droit (44),

alors que les signaux de direction (8) dont la direction de réception principale (HR) se situe à droite de la direction d'écoute principale (63) peuvent être traités par le mélangeur stéréo (7) pour former le signal audio droit (43) en étant moins retardés et plus fortement pondérés que pour la formation du signal audio gauche (44), dans lequel

h) un ou plusieurs secteurs de surveillance (61) peuvent être sélectionnés et leurs images peuvent être formées acoustiquement dans un nombre de secteurs de formation d'images (62) correspondant au nombre de secteurs de surveillance (61), le mélangeur stéréo (7) ne traitant que les signaux de direction (8) servant à former le signal audio gauche (43) et servant à former le signal audio droit (44) dont les directions de réception principales (HR) se situent dans le ou les secteur(s) de surveillance sélectionné(s) (61), **caractérisé en ce que**

i) les signaux de direction sont retardés dans le temps au moyen de coefficients de retard $\delta$ pour la formation du signal audio gauche (43) et pour la formation du signal audio droit (44), dans lequel, pour la formation du signal audio gauche (43), un m-ème signal de direction (8) est retardé de :

$$\delta_{L,m} = \frac{D}{2 \cdot v_{air}} \cdot \sin\left( \psi \cdot (\phi_m - \Phi) \cdot \frac{\pi}{180°} \right); \; avec \;\; m = \left\{1, 2, ..., N_{BS}\right\}$$

et pour la formation du signal audio droit (44), le m-ème signal de direction (8) est retardé de :

$$\delta_{R,m} = -\frac{D}{2 \cdot v_{air}} \cdot \sin\left( \psi \cdot (\phi_m - \Phi) \cdot \frac{\pi}{180°} \right); \; avec \;\; m = \left\{1, 2, ..., N_{BS}\right\}$$

où D représente une distance acceptée entre deux oreilles d'un être humain, $V_{air}$, la vitesse du son dans l'air, $\Psi$, un facteur d'étalement, $\phi_m$, la direction de réception principale (HR) associée au m-ème signal de direction (8) et $\Phi$, la direction d'écoute principale (63).

11. Procédé destiné à générer un signal audio stéréo (14) à partir de signaux acoustiques sous-marins pouvant être reçus par un système de sonar, dans lequel :

a) le système de sonar comprend une antenne de réception (1) ayant une direction de référence (BR) fixée à l'antenne et une pluralité de récepteurs acoustiques sous-marins (2), un générateur de direction (6) et un mélangeur stéréo (7),
b) la pluralité de récepteurs acoustiques sous-marins (2) obtient des signaux de réception (3, 5) à partir des signaux acoustiques sous-marins et les fournit au générateur de direction (6),
c) le générateur de direction (6) génère des signaux de direction (8) en retardant temporellement d'une façon qui dépend de la direction et en combinant en phase les signaux de réception (3, 5) et les fournit au mélangeur stéréo (7),
d) à chaque signal de direction (8) est associée une direction de réception principale (HR) en fonction du retard temporel respectif, ladite direction de réception principale se situant dans un plan de surveillance surveillé acoustiquement (UE) et étant amenée à pivoter par rapport à la direction de référence (BR), le cas échéant à l'exclusion d'un signal de direction (8) dont la direction de réception principale (HR) associée concorde avec la direction de référence (BR),
e) une direction d'écoute principale (63) et au moins un secteur de surveillance (61) se situent dans le plan de surveillance (UE), secteur de surveillance dans lequel se situent une ou plusieurs directions de réception principales adjacentes (HR) et auquel est associé un secteur de formation d'image (62) se situant dans un plan image (AE) couvert par le signal audio stéréo (14),
f) le mélangeur stéréo (7) génère un signal audio gauche (43) et un signal audio droit (44) du signal audio stéréo (14) pour une reproduction au moyen d'une unité de reproduction stéréo acoustique (13), les deux signaux audio (43, 44) comprenant des signaux cumulés de signaux de direction (8) pondérés et retardés dans le temps, et
g) le mélangeur stéréo (7) peut traiter le ou les signaux de direction (8) associés à la direction d'écoute principale (63) en les pondérant de façon égale ainsi qu'en ne les retardant pas ou en les retardant de façon égale pour la formation des signaux audio gauche et droit (43, 44), alors que les signaux de direction (8) dont les directions de réception principales (HR) se situent à gauche de la direction d'écoute principale peuvent être traités par le mélangeur stéréo (7) pour la formation du signal audio gauche (43) en étant moins retardés et en étant plus fortement pondérées que pour la formation du signal audio droit (44),
alors que les signaux de direction (8) dont la direction de réception principale (HR) se situe à droite de la direction d'écoute principale (63) peuvent être traités par le mélangeur stéréo (7) pour former le signal audio droit (43) en étant moins retardés et plus fortement pondérés que pour la formation du signal audio gauche (44), dans lequel
h) un ou plusieurs secteurs de surveillance (61) peuvent être sélectionnés et leurs images peuvent être formées acoustiquement dans un nombre de secteurs de formation d'images (62) correspondant au nombre de secteurs de surveillance (61), le mélangeur stéréo (7) ne traitant que les signaux de direction (8) servant à former le signal audio gauche (43) et servant à former le signal audio droit (44) dont les directions de réception principales (HR) se situent dans le ou les secteur(s) de surveillance sélectionné(s) (61), **caractérisé en ce que**
i) des facteurs de pondération β pondèrent les signaux de direction (8) pour la formation du signal audio gauche (43) et pour la formation du signal audio droit (44), dans lequel, pour la formation du signal audio gauche (43), un m-ème signal de direction (8) est pondéré par :

$$
\beta_{L,m} = \begin{cases} 1 & pour \ ((\phi_m - \Phi) \cdot \Psi) \geq -90° \ et \quad ((\phi_m - \Phi) \cdot \Psi) \leq 0° \\ \cos((\phi_m - \Phi) \cdot \Psi \cdot \dfrac{\pi}{180°}) & pour \ ((\phi_m - \Phi) \cdot \Psi) > 0° \ et \quad ((\phi_m - \Phi) \cdot \Psi) \geq 90° \\ 0 & sinon \end{cases}
$$

et pour la formation du signal audio droit (44), le m-ème signal de direction (8) est pondéré par

$$
\beta_{R,m} = \begin{cases} 1 & pour \ ((\phi_m - \Phi) \cdot \Psi) \leq 90° \ et \quad ((\phi_m - \Phi) \cdot \Psi) \geq 0° \\ \cos((\phi_m - \Phi) \cdot \Psi \cdot \dfrac{\pi}{180°}) & pour \ ((\phi_m - \Phi) \cdot \Psi) < 0° \ et \quad ((\phi_m - \Phi) \cdot \Psi) \geq -90° \\ 0 & sinon \end{cases}
$$

où $\phi_m$ représente la direction de réception principale associée au m-ème signal de direction (8), $\Phi$, la direction d'écoute principale (63) et $\Psi$, un facteur d'étalement, et

j) les signaux de direction sont retardés dans le temps au moyen de coefficients de retard $\delta$ pour la formation du signal audio gauche (43) et pour la formation du signal audio droit (44), dans lequel, pour la formation du signal audio gauche (43), un m-ème signal de direction (8) est retardé de :

$$
\delta_{L,m} = \frac{D}{2 \cdot v_{air}} \cdot \sin\left( \psi \cdot (\phi_m - \Phi) \cdot \frac{\pi}{180°} \right); \ avec \ \ m = \left\{ 1, 2, ..., N_{BS} \right\}
$$

et pour la formation du signal audio droit (44), le m-ème signal de direction (8) est retardé de :

$$
\delta_{R,m} = -\frac{D}{2 \cdot v_{air}} \cdot \sin\left( \psi \cdot (\phi_m - \Phi) \cdot \frac{\pi}{180°} \right); \ avec \ \ m = \left\{ 1, 2, ..., N_{BS} \right\}
$$

où D représente une distance acceptée entre deux oreilles d'un être humain, $V_{air}$, la vitesse du son dans l'air, $\Psi$, un facteur d'étalement, $\phi_m$, la direction de réception principale (HR) associée au m-ème signal de direction (8) et $\Phi$, la direction d'écoute principale (63).

12. Procédé selon l'une quelconque des revendications 9 à 11,
**caractérisé en ce que**
la direction d'écoute principale (63) peut être sélectionnée notamment en étant amenée à pivoter par rapport à la direction de référence (BR) fixée à l'antenne.

13. Procédé selon l'une quelconque des revendications 9 à 12,
**caractérisé en ce que**
l'angle d'ouverture (65) du ou d'un secteur de formation d'image (62) est identique à l'angle d'ouverture (64) du ou d'un secteur de surveillance associé (61).

14. Procédé selon l'une quelconque des revendications 9 à 12,
**caractérisé en ce que**
l'angle d'ouverture (65) du ou d'un secteur de formation d'image (62) peut être sélectionné de façon à être identique à l'angle d'ouverture (64) ou à être supérieur ou inférieur à l'angle d'ouverture (64) du ou d'un secteur de surveillance associé (61) par le fait qu'il est possible de sélectionner un facteur d'étalement Ψ qui fournit le rapport de l'angle d'ouverture (65) de ce secteur de formation d'image (62) à l'angle d'ouverture (64) du secteur de surveillance (61) associé, le facteur d'étalement IV étant plus particulièrement un nombre entier positif.

**15.** Dispositif selon l'une quelconque des revendications 9 à 14,
   **caractérisé en ce que**
   un dispositif de poursuite sélectionne automatiquement le ou les secteur(s) de surveillance (61) et/ou un signal ou plusieurs signaux de direction (8).

Fig. 1

EP 2 212 709 B1

Fig. 2

Fig. 3

Fig. 4

EP 2 212 709 B1

Fig. 5

BR

HR

63

R

61

64

1

UE | AE

A

63'

62

65

47L

47R

47

EP 2 212 709 B1

Fig. 6

EP 2 212 709 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20040174771 A
- DE 1566857 C3